# EUROPÄISCHE PATENTSCHRIFT

(11) **EP 2 003 362 B1**
(45) Veröffentlichungstag und Bekanntmachung des Hinweises auf die Patenterteilung: **01.11.2017**
(21) Anmeldenummer: 08010491.2
(22) Anmeldetag: 10.06.2008
(51) Int. Cl.: F16F 1/40, F16F 13/08

(54) **Hydraulisch vorgespanntes elastomeres Federelement und seine Verwendung in Lagern von Windkraftanlagen**
Hydraulically pre-tensioned elastomeric spring element and its use in bearings for wind power facilities
Elément de ressort en élastomère précontaint de manière hydraulique et son utilisation dans des supports d'éoliennes

(30) Priorität: 14.06.2007 EP 07011643
(43) Veröffentlichungstag der Anmeldung: 17.12.2008
(73) Patentinhaber: FM Energie GmbH & Co. KG, 64646 Heppenheim (DE)
(72) Erfinder: Mitsch, Franz, 64646 Heppenheim (DE)
(74) Vertreter: Benz, Jürgen

(56) Entgegenhaltungen:
- EP-A1- 0 381 198
- EP-A1- 1 566 543
- EP-A2- 1 450 068

## Beschreibung

Die Erfindung betrifft Federelemente und Lager, welche diese Federelement enthalten, wobei die Federsteifigkeit der Lager bzw. Federelemente sich durch verformbare Elastomerkörper, bzw. Elastomerschichten individuell durch Vorspannung einstellen lässt. Die Verformung der Elastomerschichten und damit der Federelemente wird durch eine entsprechend gestaltete Hydraulikvorrichtung erreicht. Die Dichtigkeit der erfindungsgemäßen Feder- bzw. Lagerelemente wird durch spezielle hydraulisch vorgespannte Abdichtelemente, Einsatz einer Druckmembran und spezieller konstruktiven Merkmale der Elastomerelemente erzielt. Die erfindungsgemäßen Elastomerlagerungen einschließlich ihrer Federelemente sind insbesondere zur Verwendung in Zwei- oder Mehrpunktlagerungen bei Rotor- und Getriebekonstruktionen von großen Windkraftanlagen geeignet und dienen dort dazu, Dämpfungs- und Triebstrangschwingungen abzufedern, die insbesondere zu Verschiebungs-, Verbiegungs- und Verformungskräften führen und speziell bei extremen Belastungssituationen der Anlage auftreten können.

Elastische Federelemente sind bekannt und werden in vielen Bereichen der Technik vorrangig zur Dämpfung von Schwingungen und Kräften eingesetzt. Dabei hat das Federelement eine von der Art, Größe, Form und Anzahl der vorhandenen Elastomerschichten vorgegebene definierte Steifigkeit, die gegebenenfalls nach Einbau des Federelementes in einem bestimmten Rahmen variabel gestaltet werden kann.

Bei großen Windkraftanlagen mit Leistungen von mehr als zwei Megawatt greifen nicht selten insbesondere an Rotorblättern, Rotorwelle und Triebstranglagerung, aber auch an der Gondel selbst, starke Kräfte an, welche die üblicherweise verwendeten Zwei,-Drei- oder Vierpunktlagern der Getriebe und Generatoren großen Belastungen aussetzen, so dass es zu entsprechenden insbesondere auch vertikalen Verschiebungen, Verformungen, Verwindungen, Nickbewegungen der Anlage kommen kann, möglicherweise mit Beschädigungen des Materials oder einzelner Bauteile.

Der Triebstrang von Windkraftanlagen wird in der Regel elastisch am Maschinenträger befestigt. Dies erfolgt aus Gründen der Körperschallisolation und auch um Verschiebungen des Systems zu ermöglichen. Üblicherweise sind die bekannten Lager mit passiven elastischen Elementen ausgestattet, die zumindest einen Teil derartiger Zwangskräfte und erzeugten Schwingungen aufgrund ihrer Ausrichtung und unterschiedlichen vorab eingestellten Steifigkeiten abfedern können.

Bei sehr starken, insbesondere plötzlich und schnell auftretenden Belastungen (Extremlastfall) vor allem in vertikaler Richtung, also normalerweise in Richtung, in der die üblicherweise angeordneten elastomeren Federelemente eine hohe Federsteifigkeit aufweisen, reicht die Elastizität bzw. Steifigkeit dieser Elemente, die bezüglich ihrer regulierbaren Steifigkeit in der Regel für durchschnittliche Belastungen und üblicherweise ansetzende Kräften insbesondere auf die Triebstranglagerung ausgelegt sind, nicht aus, so dass die genannten Verformungen, Verschiebungen und Verwerfungen, die in der Anlage auftreten, zu Schäden an der Anlage, vor allem am Getriebe führen, wie im folgenden näher beschrieben.

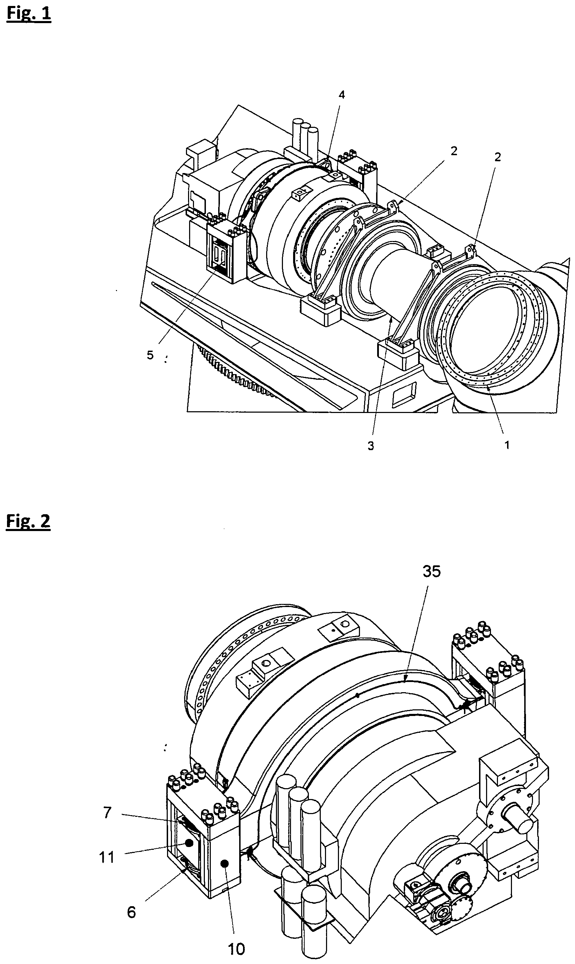

Zur Triebstrang-Lagerung von Windkraftanlagen werden im Stand der Technik unterschiedliche Systeme angewendet. Eines der Systeme ist die Momentenlagerung mit starrer Rotorwelle (Abb. 1 und 2). Bei diesem System ist die Rotorwelle kardanisch steif mit dem Maschinenträger verbunden, d.h. auf der Rotorwelle sitzen zwei Wälzlager (02) (Loslager und Festlager), die alle Gier- und Nickmomente übertragen. Der Vorteil dieses Systems ist die direkte Einleitung aller am Rotor (01) entstehenden Lasten auf kurzem Wege in den Turm. Ein weiterer Vorteil ist, dass bei Demontage des Rotors die Rotorwelle (03) und das Getriebe (04) in der Anlage verbleiben können. Gleichzeitig kann auch das Getriebe demontiert werden, ohne die Rotorwelle zu entfernen. Die Lagerung kann wie beschrieben durch zwei Wälzlager erfolgen oder durch ein großes Momentenlager, was die gleiche mechanische Funktion bewirkt. Das Drehmoment wird nach dem Stand der Technik beidseitig am Getriebe abgestützt. Der Nachteil bei diesem System ist die durch vier Lagerpunkte entstehende unbestimmte Lagerung. Durch diese unbestimmte Lagerung treten Zwangskräfte auf, die folgende Ursachen haben können: Fertigungs- und Montagetoleranzen, Fluchtungsfehler, Schrägstellung an der Rotorwelle und am Getriebeflansch und nicht zuletzt die Verbiegung aller tragenden Elemente zueinander bei unsymmetrisch wirkender Kraftanleitung durch den Rotor. Am Rotor treten außer dem Antriebs- Drehmoment zusätzlich andere Momente auf. Diese entstehen z.B. durch ungleichmäßige Windanströmung oder aber durch das Vorbeigleiten des Rotorflügels am Turm.

Nach dem Stand der Technik werden möglichst weiche Elastomerbauteile für die Getriebe-Drehmoment-Abstützung verwendet, so dass die Verschiebekräfte möglichst klein gehalten werden. Dies bewirkt jedoch auch eine große Drehbewegung des Getriebes bei Lasteinleitung, was wiederum eine Verschiebung der Getriebeausgangswelle zu der Generatorwelle bewirkt, welche nachteilig ist, so dass diese Weichheit der Elastomerbauteile nur begrenzt einsetzbar ist, oder entsprechend aufwändige Kupplungen zwischen Getriebe und Generator erforderlich werden.

Das in der EP 1 566 543 A1 beschriebene System ermöglicht es, die oben erläuterten Zwangskräfte aus der Vier-Punkt-Lagerung der Anlage herauszunehmen. In dieser Anmeldung ist eine Elastomerlagerung für Windkraftanlagen mit regulierbarer Steifigkeit beschrieben, bei der die Elastomerelemente in besagter vertikaler Richtung in ihrer Steifigkeit durch eine hydraulische oder mechanische Vorrichtung verändert werden kann. Diese Federelemente umfassen im wesentlichen eine Anschlussplatte und eine Endplatte zwischen denen sich mindestens eine Elastomerschicht befindet, wobei die Anschlussplatte eine Öffnung mit einem Anschlussteil aufweist, durch welche mit einem Verdrängungselementes in Form einer hydraulischen Flüssigkeit oder eines beweglichen Kolbenelementes Druck auf die Elastomerschicht ausgeübt werden kann, wodurch eine Vorspannungserhöhung des Federelementes und somit eine Versteifung in vertikaler Richtung erreicht wird.

Diese Federelemente haben sich in der Praxis, obwohl sie die gewünschten technischen Effekte in Bezug auf die Dämpfung erzielen, als problematisch erwiesen, denn bei den notwendigen hohen Drücken, die erzeugt werden müssen, um die Steifigkeit in vertikaler Richtung hinreichend zu vergrößern, treten immer wieder Dichtigkeitsprobleme mit Verlust von Hydraulikflüssigkeit auf, und dies obwohl die Elastomerschichten, die von Hydraulikflüssigkeit komprimiert werden, durch Vulkanisation und / oder Verklebung fest mit den umgebenden Teilen verbunden sind.

Bei näheren Untersuchungen und Tests mit dem in der EP 1 566 543 beschriebenen Federelement aber auch generell in anderen elastomeren Lagerungen des Standes der Technik hat sich nun überraschend gezeigt, dass insbesondere großvolumigen Elastomerbauteile, wenn sie mit hydraulischen Flüssigkeiten gleich welcher Art (z.B. Wasser, Öl, Alkohole, Mischungen derselben) unter Druck in Kontakt stehen, nicht ohne weiteres abzudichten sind. Offensichtlich werden kleine Tröpfchen der Hydraulikflüssigkeit bei Dauerbelastung und unter höheren Drucken von der insbesondere bei großen Elastomervolumen vorliegenden porösen Struktur aufgenommen und durch die schwer vermeidbare Fließstrukturen in dem Elastomermaterial kontinuierlich weiter transportiert, bis sie an unterschiedlichen oft nicht erwarteten Stellen des Bauteils austreten. Ohne sich an eine Theorie zu binden, kann man diese Ergebnisse so interpretieren, dass ein Tröpfchen der Hydraulikflüssigkeit im entsprechenden Hydraulikraum in eine kleine Kerbe oder Pore der Oberfläche des angrenzenden Elastomers gedrückt wird, die sich während der dynamischen Belastung öffnet und schließt, so dass das Tröpfchen eingesperrt und kontinuierlich weiter befördert wird, bis es das Ende des Elastomers bzw. Bauteils erreicht und somit ein Leck entstehen lässt. Der Austritt von Hydraulikflüssigkeit aus den Federelementen bzw. Lagern der EP 1 566 543 A1 stellt somit ein ernsthaftes Problem dar, was es zu lösen gilt.

Überdies wurde festgestellt, dass der direkte Kontakt der hydraulischen Flüssigkeit mit dem Elastomermaterial der Federelemente unter Einwirkung hoher Drücke zu einer verminderten Haltbarkeit oder Elastizität des Elastomers führen kann, so dass die entsprechenden Federelemente unter Umständen früher ausgetauscht werden müssen.

Es stellt sich somit die Aufgabe, entsprechende Federelemente bzw. Lager basierend auf dem Grundkonzept der EP 1 566 543 A1 zur Verfügung zu stellen, welche bei gleicher oder verbesserter Regulierbarkeit der Steifigkeit des Federelementes die beschriebenen Nachteile der entsprechenden Lagerungen des Standes der Technik nicht aufweisen.

Die Aufgabe wurde gelöst durch die im folgenden und in den Ansprüchen spezifizierten Federelemente, Lager und deren Verwendung.

Gegenstand der Erfindung ist somit ein in seiner Steifigkeit durch hydraulisch erzeugten Druck einstellbares, aus Schichten aufgebautes Federelement im wesentlichen umfassend zwei oder mehrere Elastomerschichten (1), unelastischen Zwischenschichten (2), einer oder mehrere Hydraulikvorrichtungen inklusive Abdichtungselemente (4, 7, 9, 11, 12) und gegebenenfalls unelastischen Abschlussplatten, wobei zwei Elastomerschichten durch eine unelastische Zwischenschicht oder -platte voneinander getrennt sind, und die unelastischen Schichten eine zentrisch angeordnete Öffnung oder Bohrung besitzen, so dass das Federelement zumindest im Inneren einen durchgehenden elastomeren Kern aufweist, mit dem die Elastomerschichten in Verbindung stehen, wobei - in vertikaler Richtung zu den Schichten gesehen - auf einer oder beiden Seiten des Federelements besagte Hydraulik-Vorrichtung vorgesehen ist, welche durch Verdrängung bzw. Einbringung einer hydraulischen Flüssigkeit mittels hydraulischen Drucks in das Federelement die Kompression des Elastomermaterials (1) im Kernbereich desselben in vertikaler Richtung zu den Schichten bewirkt, so dass ein Verdrängungsraum entsteht oder vergrößert wird. Dabei zeichnet sich besagtes Federelement dadurch aus, dass zwischen der Elastomerschicht im Kernbereich des Federelementes und dem Verdrängungsraum eine elastische Druckmembran (5) angeordnet ist, die an ihrem vorzugsweise äußerem Rand mit der Hydraulik-Vorrichtung oder Teilen davon fest verbunden ist, so dass ein Membranraum (12) entsteht, der zumindest bei Vorliegen eines hydraulischen Druckes dem Verdrängungsraum entspricht und hydraulische Flüssigkeit enthält, und die Hydraulik-Vorrichtung ein oder mehrere Abdichtungs-Elemente umfasst, welche eine Vorspannung aufweisen und so angeordnet sind, dass sie auf die Druckmembran im Bereich ihrer Verbindung zur Hydraulik-Vorrichtung einen erhöhten Druck gegenüber dem Druck im Membranraum erzeugen, wodurch die feste Verbindung zum hydraulische Flüssigkeit aufweisenden Membranraum selbst bei sehr hohen Drücken im Inneren des Membranraumes absolut druckdicht wird.

Generell wird erfindungsgemäß unter "Verdrängungsraum" der Raum verstanden, der durch das Einbringen einer hydraulischen Flüssigkeit in das Federelement unter Erzeugung eines hydraulischen Druckes durch Komprimieren von Elastomermaterial entsteht bzw. gegebenenfalls schon vorher vorhanden ist. Demgegenüber wird unter "Membranraum" (12) der geometrische Raum verstanden, der zwischen der Membranplatte (9) und der über dieser gespannten Druckmembran (5) gebildet wird. In der Regel, entspricht unter Druck der Membranraum im wesentlichen dem Verdrängungsraum.

Gegenstand der Erfindung ist insbesondere ein entsprechendes Federelement, bei dem die elastische Druckmembran (5) auf einer zur Hydraulik-Vorrichtung gehörenden Membranplatte (9) aufliegt, und an ihrem Rand mit dieser über einen elastischen Wulst (10), der eine T-Nut förmige Aussparung (10a) in der Membranplatte ausfüllt, verbunden ist, und ein unelastisches Druckerhöhungselement (6), vorzugsweise ein Profilring, zwischen Elastomerschicht (1) und der Druckmembran im Bereich ihres Wulstes angeordnet ist, welches ein entsprechend geformtes Profil besitzt, das bei Vorspannung, welche einem höheren Druck zu entsprechen hat als der Druck im Membranraum (12), in das elastische Material im Bereich des Wulstes der Druckmembran gepresst wird, und somit zu einer gezielten Abdichtung im Bereich der T-Nut der Membranplatte führt.

Ferner hat sich gezeigt, dass die Abdichtung besonders vorteilhaft, stabil und komplett ist, wenn zwischen Druckerhöhungselement (6) und elastischem Wulst (10) der Druckmembran ein Vorspannfreiraum (10c) zur Verfügung gestellt wird, der durch eine entsprechende, vorzugsweise keilförmige Aussparung im Material der Abdichtungselemente bzw. der entsprechenden Teile der Hydraulikvorrichtung gebildet werden kann.

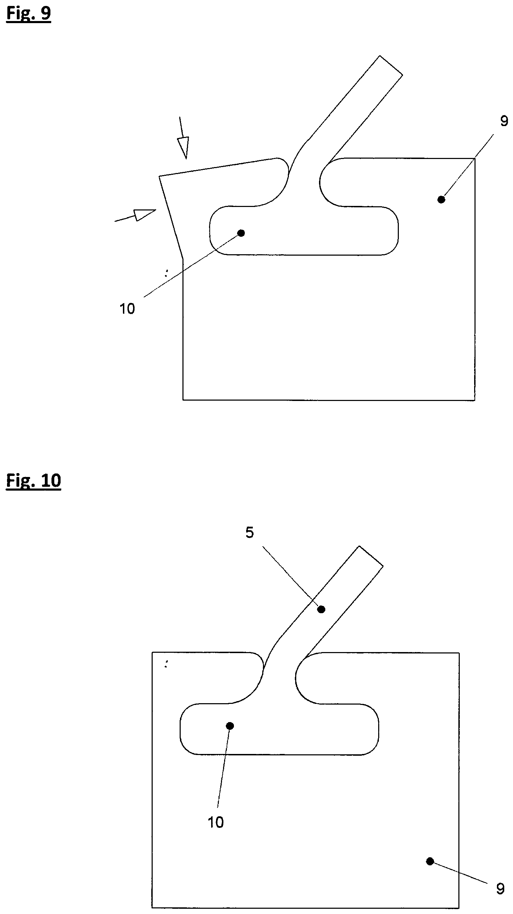

In einer besonders einfachen Ausführungsform wird auf das Druckerhöhungselement (6), beispielsweise den Profilring verzichtet und funktionell durch die Membranplatte (9) ersetzt, welche in diesem Fall aber im Bereich der T-Nut verpresst ist, so dass es lokal zu einem erhöhten Druck kommt, was zu einer stärkeren Abdichtung in diesem Bereich führt (Abb.9).

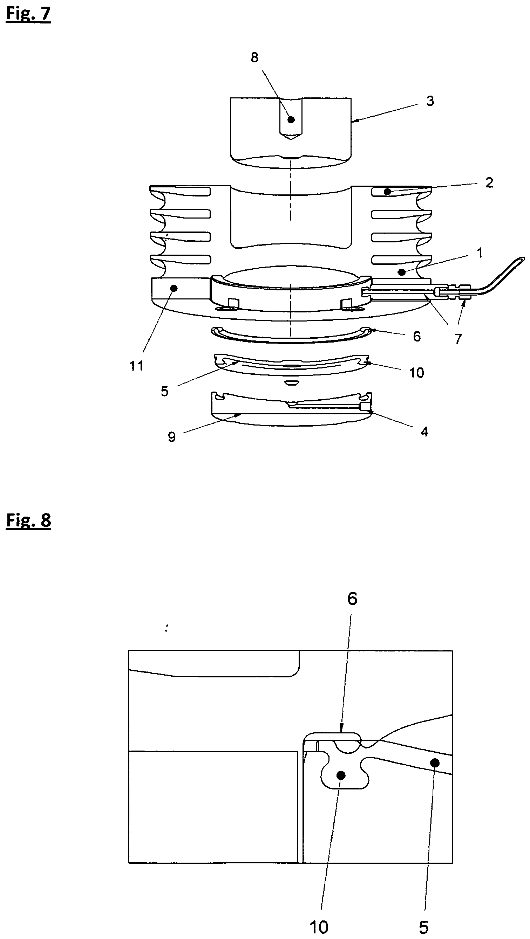

In den Ausführungsformen der Abbildungen 6, 7 und 8 ist die Membran typischer weise eine Rundmembran, welche flach auf der Membranplatte (9) aufliegt. Durch entsprechende Einleitung einer hydraulischen Flüssigkeit wird die Membran aufgebläht, wodurch eine Kompression der auf der anderen Seite der Membran liegenden Elastomerschichten (1) bewirkt wird und zwischen Membranplatte (9) und der Membran ein Verdrängungs- bzw. Membranraum entsteht (Abb. 6). In einer weiteren vorteilhaften Ausführungsform weist die Membranplatte (9) eine konkav gekrümmte Oberfläche auf, so dass bei flach gespannter Druckmembran (5) bereits ohne erzeugten Druck ein Membranraum vorliegt, der zwischen der Unterseite der flach gespannten Membran und der konkaven Oberfläche der Membranplatte gebildet wird (Abb. 7, 8).

In einer weiteren Ausführungsform kann auch die Elastomerschicht (1) im Bereich der Berührungsfläche mit der Druckmembran (5) eine konkav gekrümmte Aussparung besitzen.

In einer besonders vorteilhaften Ausführungsform weist sowohl die Membranplatte (9) als auch die über der Druckmembran liegende Elastomerschicht eine entsprechnd konkave Oberfläche auf, so dass ein linsenförmiger Membran- bzw.Verdrängungsraum vorliegt.

Gegenstand der Erfindung ist auch ein entsprechendes Federelement, bei dem die Membranplatte (9) Hydraulikzuleitungen (4) und -anschlüsse (7) aufweist, welche durch die Membranplatte hindurchführen und in den Membranraum münden und diesen mit Hydraulikflüssigkeit versorgen können.

In einer weiteren Ausführungsreihe der erfindungsgemäßen Federelemente weisen diese eine Trägerplatte (11) für die Elastomerschichten (1) auf, welche vorzugsweise eine Aussparung besitzen, in der die Membranplatte (9) als separater Teil der Trägerplatte Platz findet.

In einer besonderen Ausführungsform kann bei dieser Lösung auch die Membranplatte gegenüber der Trägerplatte selbst verspannt sein.

Gegenstand der Erfindung sind ferner Federelemente gleichen Prinzips wie beschrieben, die aber aufgrund ihrer Platz sparenden Weise besondere konstruktive Merkmale aufweisen. So umfasst die Erfindung ein Federelement, bei dem die elastische Druckmembran (5) einen umlaufenden endständigen elastischen T-förmigen Wulst (10), bestehend aus einem äußeren (26) und inneren Wulst (23), aufweist und mit einer zur Hydraulik-Vorrichtung gehörenden Membranplatte (9) auf die Weise druckdicht verbunden ist, dass besagte Wulste in ein entsprechend geformtes passendes T-förmiges Hohlprofil (10b) eingelegt sind, welches von einem entsprechend geformten Membrankopf (9a) und einer Vorspannscheibe (21) gebildet wird, wobei (a) der Membrankopf ein Teil der Membranplatte (9) ist und innerhalb der Membran und des Membranraumes (12) angeordnet ist sowie eine umlaufenden überstehende Lippe (24) besitzt, welche den inneren Wulst (23) der Membran aufnimmt, und (b) die Vorspannplatte eine ringartige Öffnung bzw. Aussparung aufweist, welche den Membrankopf (9a) mit der Druckmembran passgenau aufnimmt, und der Rand der Öffnung / Aussparung von einer überstehenden Lippe gebildet wird, welche den äußeren elastischen Wulst (26) der Membran aufnimmt.

In einer besonderen Ausführungsform liegt die Vorspannscheibe (21) ganz oder teilweise auf der Membranplatte (9) außer dem Bereich des Membrankopfes (9a) auf und ist zwischen der ersten Elastomerschicht (1) oder ggf. der Elastomerträgerplatte und besagter Membranplatte angeordnet. In diesem Fall ist vorzugsweise die Vorspannsscheibe (21) mit den Elastomerschichten (1) außerhalb des Bereiches der Druckmembran fest verbunden.

Ferner ist vorzugsweise die Membranscheibe (9) gegen die Vorspannscheibe (21) mittels Befestigungsmitteln verspannt, so dass der T-förmige elastische Wulst (23, 26) der Druckmembran komprimiert wird.

Die Vorspannscheibe oder -platte (21) kann erfindungsgemäß auch Trägerplatte für das Federelement selbst sein, wobei bei dieser Ausführung sie im Bereich der Druckmembran eine passgenaue Aussparung besitzt, in welche die entsprechend geformte Membranplatte (9) mit ihrem entsprechend geformten Membrankopf (9a) eingesetzt und mit der Platte (21) mittels Befestigungsmitteln verspannt wird.

Im allgemeinen weist in den betreffenden Ausführungsformen die Membranplatte (9) mindestens einen Hydraulikzulauf und -Anschluss (4, 7) auf, wobei der Hydraulikzulauf durch den Membrankopf (9a) führt und im Membranraum (12) mündet.

Auch die Federelemente, die einen kleineren Bauraum einnehmen, weisen vorzugsweise einen Vorspannfreiraum (22) auf, der im ungespannten Zustand gebildet wird im Bereich, in dem äußerer Wulst (26), Membranscheibe (9) und Vorspannscheibe (21) zusammentreffen, und der sich bei Verspannen der Teile (21) und (9) durch Hineindrücken von Wulstmaterial vollständig schließt.

Die elastische Druckmembran (5) gemäß der Erfindung sollte erfindungsgemäß eine gewisse Weichheit und Flexibilität haben. Solche Membranen sind vorzugsweise für erfindungsgemäße Federelement geeignet, bei denen eine große Grundfläche notwendig oder erwünscht ist. Bei Federelementen, die nicht viel Platz einnehmen dürfen, sind solche großflächigen Druckmembranen nicht erwünscht und werden erfindungsgemäß durch die kegelförmigen bzw. parboloiden Membranen ersetzt, die vorzugsweise in steifer und wenig flexibler aber bezüglich Dehnung elastischer Ausführung eingesetzt werden. Gegenstand der Erfindung sind somit auch solche Federelemente, bei denen die Druckmembran (5) steif ist und eine paraboloide oder kegelförmige Raumform aufweist, welche mit dem an der Basis befindlichen Membrankopf (9a) einen entsprechend geformten kegelhutartigen Membranhohlraum (12) bzw. einen Membrankegelhut (12a) bildet.

Gegenstand der Erfindung sind insbesondere auch entsprechende Federelemente bei denen die Elastomerschichten (1) im Kern des Federelementes eine dem Membranhohlraum (12) entsprechend geformte kegelförmige Kavität besitzen, welche von dem von der Druckmembran gebildeten Membrankegelhut (12a) ausgefüllt wird. Derartige Federelemente können in der Weise modifiziert werden, dass der Membranhohlraum (12) des Druckmembrankegelhuts (12a) eine Anschlagvorrichtung (50) aufweist, welche bei Überlastung des Systems verhindert, dass die kegelförmige Druckmembran irreversibel kollabiert. Eine solche Anschlagvorrichtung ist aus einem unelastischen Material vorzugsweise in Form eines Kegelhutes gefertigt ist, welcher zentral im Inneren des Membranhohlraums (12) auf der Grundfläche des Membrankopfes (12a) angeordnet ist und eine Zulaufführung sowie einen Anschluss zur Hydraulikzuleitung (4) aufweist. Die Zulaufführung kann auch in Form eines Ringspaltes ausgeführt sein.

Generell können die beschriebenen Hydraulikvorrichtungen inklusive Druckmembranen und Abdichtungselementen auf beiden (der oberen und unteren) Seiten des Federelementes angebracht sein. Solche Federelemente sind insbesondere dann geeignet, wenn sie sehr groß sein müssen, so dass ein einseitig erzeugter Druck ungünstig sein kann. In den meisten Fällen reicht es aus, wenn das Federelement nur auf einer Seite mit einer entsprechenden Vorrichtung ausgerüstet ist.

In solchen Fällen kann ein solches Federelement derart ausgestattet sein, dass es auf der der Hydraulik-Vorrichtung gegenüberliegenden Seite im Kernbereich des Federelementes eine Aussparung oder einen Hohlraum (40) im Elastomermaterial aufweist, welche(r) so geformt und ausgestaltet ist, dass sie/er mittels eines Steges (42) aus Elastomermaterial der Schichten (1) von dem Membranraum (12) getrennt ist, so dass der Steg bei Erhöhung des hydraulischen Druckes im Membranraum in den Hohlraum bzw. die Aussparung gedrückt werden kann. Hierdurch ist eine größere Variabilität der Einstellbarkeit der Steifigkeit möglich, insbesondere, wenn die Aussparung bzw. der Hohlraum (40) noch zusätzlich ein unelastisches Kalibrierungselement (3, 8) aufweist, mit dessen Hilfe sich das Volumen der Aussparung bzw. des Hohlraums (4) verändern lässt.

Die beschrieben Federelemente sind bestens geeignet, als Lager für Maschinen oder Getriebe eingesetzt zu werden. Gegenstand der Erfindung ist somit eine Lagerung, umfassend mindestens zwei gegenüberliegende gleichartig ausgerichtete oder angeordnete und somit in Bezug auf ihre Dämpfungseigenschaften gleich wirkende Federelemente, zwischen denen das Getriebe bzw. die Maschine befestigt ist, wie oben, unten und in den Ansprüchen beschrieben. Um eine optimale Dämpfungswirkung zu erzielen, sind die erfindungsgemäßen Federelemente durch kreuzweise angeordnete Hydraulikleitungen (34, 35) miteinander verbunden, wodurch die Lager die weiter beschriebenen Eigenschaften erhalten. Ferner können sie mit mindestens einem Überdruckventil (31) und einem Drosselventil (33, 36, 37) ausgestattet sein zur gezielten Steuerung bei unter Last stehenden Anlagen, wie ebenfalls nachfolgend erläutert.

Gegenstand der Erfindung ist letztlich die Verwendung der geschilderten Lager bzw. Federelements. Diese sind zur Verwendung in Maschinen, insbesondere aber Windkraftanlagen vorgesehen, und dienen hier zur Abfederung von Verbiegungs-, Verformungs- und Verschiebungskräften, welche insbesondere im Extremlastfall in vertikaler Richtung zu den montierten Federelementen auftreten.

Im folgenden werden die Abbildungen kurz erläutert:

| | |
|---|---|
| Abb. 1 | Gesamtsystem |
| Abb. 2 | Getriebe mit Elastomer - hydraulischer Drehmomentstütze |
| Abb. 3 | Eigenschaften bei Drehmoment |
| Abb. 4 | Eigenschaften bei Verschiebung |
| Abb. 5 | Steifigkeits-Kennlinie |
| Abb. 6 | Flächenmembran |
| Abb. 7 | Flächenmembran Explosionszeichnung |
| Abb. 8 | Flächenmembran Detail Druckerhöhungsring |
| Abb. 9 | Flächenmembran Vorspannungserhöhung durch Verformung der Membranplatte |
| Abb. 10 | Flächenmembran Vorspannungserhöhung durch Verformung der Membranplatte |
| Abb. 11 | Aufbau mit Parabelmembran |
| Abb. 12 | Aufbau mit Parabelmembran Explosionszeichnung |
| Abb. 13 | Parabelmembran Detail Vorspannfreiraum |
| Abb. 14 | Vorspannung über innere Scheibe |
| Abb. 15 | Membran anvulkanisiert mit verschließbarer Öffnung für Werkzeugdurchdringung |
| Abb. 16 | Hydraulikleitung mit Überdruckventil und Drossel |
| Abb. 17 | Parabel (Kegel) Membran mit Hohlraum im Elastomerkern |
| Abb. 18 | Parabel (Kegel) Membran mit Hohlraum im Elastomerkern und Verspannschraube in Bohrung der Membranplatte |
| Abb. 19 | Parabel (Kegel) Membran mit Hohlraum im Elastomerkern und Endanschlag im Membranraum |
| Abb. 20 | Membranplatte mit Bohrungen und Befüll-Leitung und -Hahn |
| Abb. 21 | Radialer Anschlag |
| Abb. 22 | Anordnung am Generator bei getriebelosen Anlagen |
| Abb. 23 | Ausschnit aus Abb. 22 |

Ebenso werden die im Text, in den Ansprüchen und in den Abbildungen verwendeten Bezugsgrößen erläutert:

| Für die Abb. 1 - 5 | |
|---|---|
| 01 | Rotor |
| 02 | Rotorlager |
| 03 | Rotorwelle |
| 04 | Getriebe |
| 05 | Elastomer-hydraulische Drehmomentstütze |
| 06 | Elastomerbauteil Druckseite unten |
| 07 | Elastomerbauteil Entlastungsseite oben |
| 08 | Elastomerbauteil Druckseite oben |
| 09 | Elastomerbauteil Entlastungsseite unten |
| 010 | Joch Drehmomentstütze |
| 011 | Getriebeseitige Drehmomentstütze |
| 012 | Vertikale Verschieberichtung |
| 013 | Drehmoment |

| für die Abb. 6 - 23 | |
|---|---|
| 1 | Elastomer |
| 2 | Zwischenbleche |
| 3 | Kalibrierelement |
| 4 | Flüssigkeitszulauf |
| 5 | Flächenmembran |
| 6 | Druck-Erhöhungs-Ring |
| 7 | Hydraulikanschluss |
| 8 | Kalibrierbohrung |
| 9 | Membranplatte |
| 9a | Membrankopf |
| 10 | Elastischer Dichtungswulst |
| 10a | T-Nut förmige Aussparung in (9) |
| 10b | T-Nut förmiges Hohprofil (Abb. 11, 12) |
| 10c | Vorspann-Freiraum |
| 11 | Untere Trageplatte |
| 12 | Menmbranraum (Verdrängungsraum) |
| 12a | Parabol(Kegel)Membran, kegelhut |
| 13 | Schrauben bzw. Bohrungen zur Membran-Verspannung |
| 21 | Vorspannring, Vorspannplatte |
| 22 | Vorspann-Freiraum |
| 23 | Innerer Wulst |
| 24 | Innere Wulst-Klemmungs-Lippe |
| 25 | Parabelmembran |
| 26 | Äußerer Wulst |
| 28 | Abstand Membranblech |
| 31 | Überdruckventil |
| 32 | Magnetventil |
| 33 | Drossel im Verbindungsstrang |
| 34 | Rohrleitung Druckseite |
| 35 | Rohrleitung Entlastungsseite |
| 36 | Drossel im Hauptstrang Entlastungsseite |
| 37 | Drossel im Hauptstrang Druckseite |
| 40 | Hohlraum zur Volumenvergrößerung |
| 41 | Entlüftung des Hohlraums |
| 42 | Trennungssteg (Elastomer) zwischen Membranraum und Hohlraum 40 |
| 43 | Befüll-Hahn |
| 44 | Befüll-Leitung |
| 50 | End-Anschlag |
| 51 | Flüssigkeitsführung durch Endanschlag 50 |
| 52 | Anschlagring |
| 53 | Blech mit qrößerem Durchmesser und größerer Dicke |
| 54 | Generator getriebelose Anlage |
| 55 | Maschinenträger |
| 56 | Elastomer- hydraulisches Lager |
| 57 | Maschineträger Lager |
| 58 | Generatorseitiges Lager |

Die für die erfindungsgemäßen Schichten (1) verwendeten Elastomermaterialien bestehen im wesentlichen aus einem Naturkautschuk, einem Naturkautschukderivat oder aus einem geeigneten elastischen polymeren Kunststoff oder Kunststoffgemisch. Die Elastomerschicht kann erfindungsgemäß unterschiedliche Härte ("Shore-Härte") und unterschiedliche Dämpfungseigenschaften aufweisen, entsprechend den gewünschten Anforderungen. Vorzugsweise werden Elastomere mit einer Härte von 20 bis 100 Shore A, insbesondere 30 bis 80 Shore A verwendet. Die Herstellung derartiger Elastomere unterschiedlicher Härte ist im Stand der Technik bekannt und in der einschlägigen Literatur hinreichend beschrieben.

Die nicht-elastomeren Zwischenplatten bzw. -schichten (2) sind erfindungsgemäß aus weitestgehend unelastischen Werkstoffen mit geringer Kompressibilität gefertigt. Vorzugsweise sind dies Metallbleche, aber auch andere Materialien, wie harte Kunststoffe, Verbundwerkstoffe oder karbonfaserhaltige Werkstoffe sind einsetzbar. Die Zwischenbleche und die Elastomermaterialien (4) werden in der Regel durch Vulkanisierung miteinander verbunden.

Die Druckmembran (5) ist in der Regel ebenfalls aus Naturkautschuk oder einem Naturkautschukderivat gefertigt. Das Material muss über einen großen Bereich reiß- und druckfest sein. Vorzugweise ist es von glatter, dichter Struktur, welche keine Oberflächen-Poren, oder nur Poren mit sehr kleinem Durchmesser aufweist, die keine Mikrotröpfchen der hydraulischen Flüssigkeit aufzunehmen vermögen.

Als hydraulische Flüssigkeiten können generell alle üblichen druckstabilen Flüssigkeiten verwendet werden. Für Windkraftanlagen ist beispielsweise auch Wasser, dem gegebenenfalls Gefrierschutzmittel, Alkohole oder Additive beigesetzt sind, geeignet. Ebenso können auch Hydrauliköle Anwendung finden.

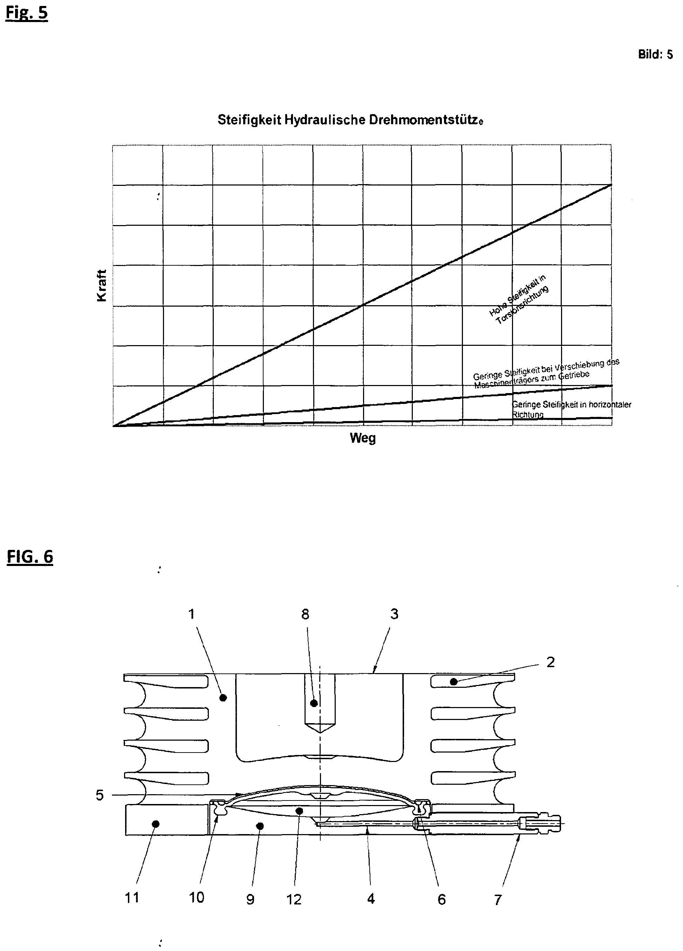

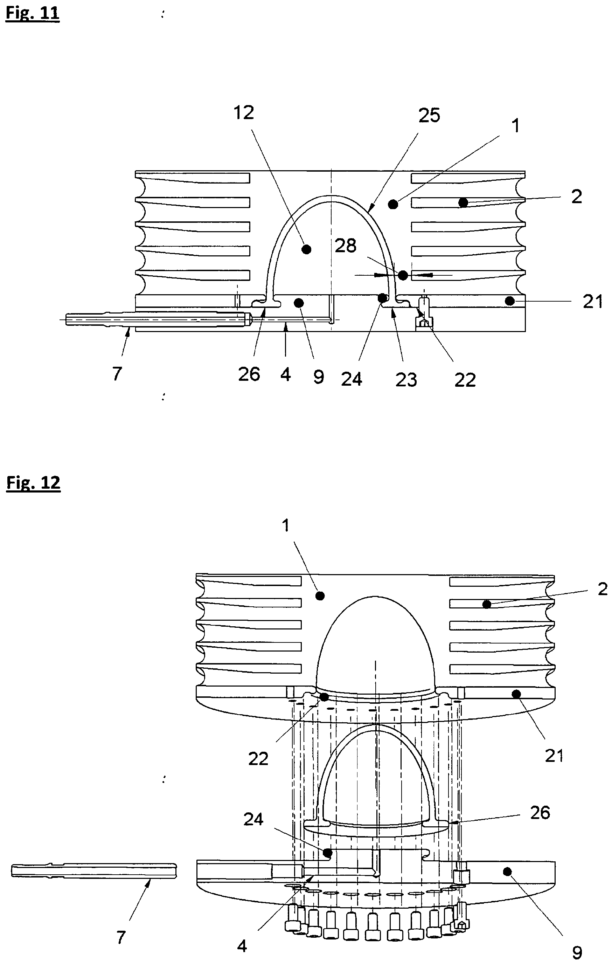

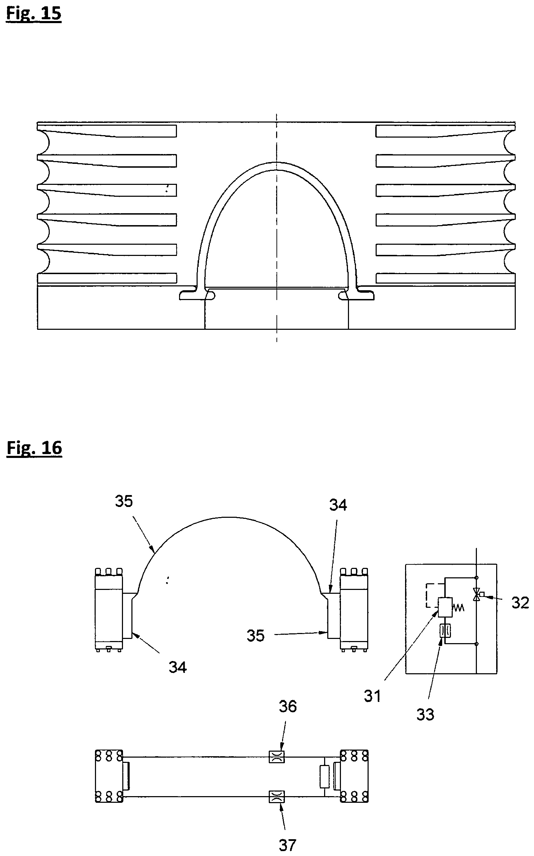

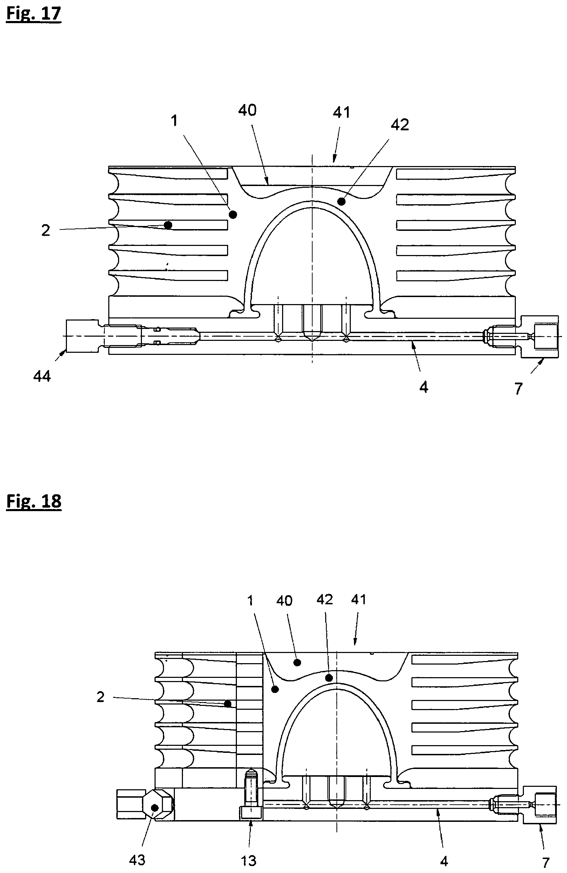

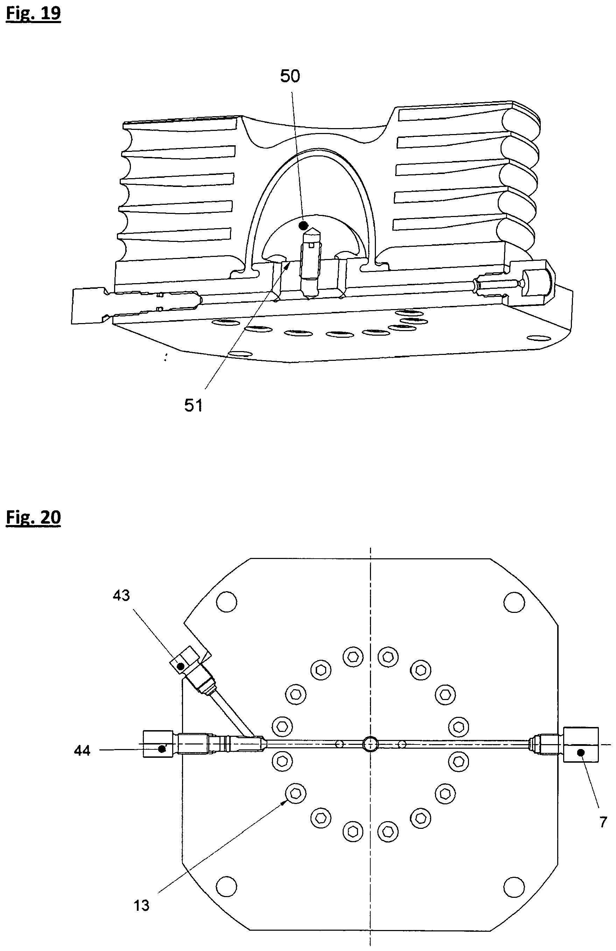

Das erfindungsgemäße Federelement kann in zwei prinzipiellen konstruktiven Ausführungsformen eingesetzt werden. Die erste Ausführungsform basiert auf einer Flachmembran (5), die eine relative große Fläche auf der Membranplatte (9) einnimmt. Der Verdrängungsraum, bzw. Membranraum (5) wird vor allem durch das Aufblähen der auf der Membranplatte flach aufliegenden Membran bei gleichzeitiger Komprimierung der Elastomerschichten (1) oberhalb der Druckmembran gebildet. Aussparungen, vorzugsweise konkaver Art, in der Elastomerschicht oberhalb der Membran und / oder in der Membranplatte (9) unterhalb der Membran können einen Verdrängungsraum bereits im drucklosen Zustand generieren. Während die Flachmembran (Abb. 6) eine relativ flache, vorzugsweise linsenförmige Gestalt aufweist, wird die zweite prinzipielle Ausführungsform durch die Parabelmembran oder Kegelmembran vertreten (Abb. 11 - 19), welche bereits im drucklosen Zustand die besagte Kegelform oder einen Paraboloid darstellt. Im wesentlichen stellt die Membran eine Dichtfunktion zwischen dem Fluid und dem Elastomerkörper dar.

Abb. 6 sowie 11 - 19 stellen ein Elastomerbauteil mit mehreren Schichten (z.B. 4 Schichten) dar. Die Besonderheit gegenüber üblichen Schichtfedern besteht darin, dass die vorzugsweise runden Zwischenbleche (2) eine vorzugsweise zentrische Bohrung aufweisen, so dass die unelastische Struktur nur im äußeren Bereich vorliegt. Im inneren Bereich, dem Kernbereich, ist nur Elastomer (1) vorhanden, welches vorzugsweise eine Aussparung in dem Bereich aufweist, den die Membranfläche einnimmt. Durch Einbringen von mehr oder weniger Flüssigkeit in die Membran wird Elastomervolumen verdrängt, was bei gleicher Einbauhöhe des Gesamtelementes zu einer Steifigkeitserhöhung führt.

Die erfindungsgemäßen Federelemente umfassen eine Membranplatte (9), welche eine Öffnung für den Anschluss der Hydraulikleitungen enthält. Weiterhin enthält die Membranplatte eine ringförmige T-Nut (10) in welche die Flächenmembran (5) einvulkanisiert wird. Bei der Vulkanisation besteht die Besonderheit, dass lediglich im Bereich der T-Nut eine Bindung erfolgt. Der restliche Bereich bleibt ohne Bindung, sodass hier ein Hohlraum zum Einbringen des Hydraulikmediums in den Membranraum (12) entsteht. Erfindungsgemäß ist die Dichtigkeit der T-förmigen Verbindung sehr wichtig. Im Stande der Technik wird diese zum einen dadurch erreicht, dass ein Bindemittel in die T-Nut vor der Vulkanisation aufgetragen wird, sodass eine Gummi-Metall-Verbindung entsteht. Diese Gummi-Metall-Verbindung soll nach dem Stand der Technik absolut dicht sein. Wie bereits oben im Detail geschildert, haben Praxistests, die dieser Erfindung zugrunde liegen, jedoch gezeigt, dass dies nicht der Fall ist, weil die von dem Erfinder aufgefundene Tröpfchenwanderung dafür verantwortlich ist und dazu führt, dass bei dynamischer Belastung das Bindemittel zwischen Gummi und Metall mikrometerweise abgesprengt wird. Daraus wird deutlich, dass an diesen Stellen ein höherer Druck als in den anderen Bereichen erzeugt werden muss, um Dichtigkeit zu erreichen. Dieser höherer Druck wird gemäß der Erfindung durch den Druckerhöhungsring (6) erreicht. Dieser liegt auf der Membran und bekommt aufgrund des hohen Druckes und der größeren oberen Fläche einen Vordruck, mit dem er sich in die T-Nut der Membran hineinpressen kann und somit im T-förmigen Bereich (10) eine Druckerhöhung erzeugt, wodurch das Absprengen des Bindemittels durch eindringende hydraulische Flüssigkeit verhindert wird. Der Druckerhöhungsring kann dabei in den verschiedensten Ausführungsformen gestaltet sein. Letztlich ist entscheidend, dass der Druck in dem Bereich durch eine Vorspannung vergrößert wird.

Eine einfache Variante verzichtet auf einen eigenen Druckerhöhungsring. Bei diesen in Abb. 9 und 10 beschriebenen Varianten wird die T-fömige Nut in die Membranplatte (9) eingebracht und vulkanisiert. Danach wird der äußere Bereich der Membranplatte nach innen gebogen, so dass dadurch eine Druckerhöhung im Bereich der T-Nut (10) stattfindet und Dichtigkeit gewährleistet wird.

Bei den Ausführungsformen der Flachmembran-Federelemente (Abb. 6) sind Drücke von 100 bar bis 700 bar vorgesehen. Eine weitere Möglichkeit zur Abdichtung der Elemente bietet, wie erwähnt, die im Querschnitt parabelförmige Membran (Abb. 11 - 15, 17 - 20), welche eine kegelförmige oder auch paraboloide Raumform einnimmt. Der grundsätzliche Aufbau ist ähnlich wie bei der Flächenmembran, jedoch benötigt diese Bauweise eine kleinere Fläche.

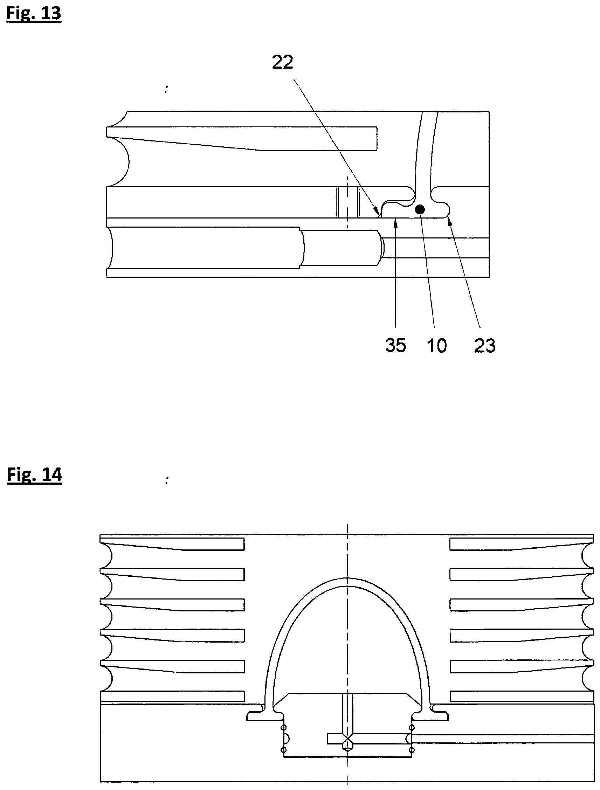

Das ermöglicht einen geringeren Einbauraum und reduziert die Kosten der Teile. Gleichzeitig entstehen jedoch höhere Drücke aufgrund der kleineren Fläche bei gleicher Last. Zur dichten Befestigung der Parabelmembran an der Membranplatte (9) wird diese mit zwei Wulsten verklemmt. Dazu wird die Parabelmembran (25) wie ein Reifen über die Innerer- Wulst-Klemmring-Lippe (24) des Membrankopfes (9a) gezogen, so dass der innere Wulst (23) annähernd luftfrei hinter der Lippe (24) mit leichter Vorspannung eingebracht ist. Anschließend wird die Membranplatte (9) mit dem Vorspannring (21) verschraubt. Der äußere Wulst (26) hat jedoch ein deutlich größeres Maß als der Hohlraum zwischen (21) und (9), so dass sich hier eine Vorspannung ergibt. Diese Vorspannung beträgt ca. 10 % bis 40 % der Dicke des äußeren Wulstes (26), so dass ein Teil des Volumens des äußeren Wulstes zum inneren Wulst (23) verschoben wird, so dass auch hier eine Vorspannung entsteht und somit die Dichtigkeit des Wulstes erreicht wird. Bei dieser Art von Konstruktion kann das Problem auftreten, dass der äußere Wulst (26) sich beim Vorspannen nach beiden Seiten verschiebt und er sich somit zwischen den Vorspannring (21) und die Membranplatte (9) schiebt, bevor diese zusammenkommen und den Spalt verschließen. Somit würde sich der äußere Wulst (26) zwischen Vorspannring (21) und Membran (9) einklemmen. Um das zu verhindern, wird ein, vorzugsweise keilförmiger Vorspannfreiraum (22) vorgesehen. Dieser Vorspannfreiraum ist ca. 2 - 3 mm tief, d.h. tiefer als das Material unter der gegebenen Vorspannung fließt, so dass hier ein undefiniertes Einklemmen des Elastomers aus dem äußeren Wulst (26) verhindert wird. Die Klemmung kann ohne Zusatzmedium erfolgen. Zur sichereren Befestigung ist es auch möglich, Kleber in die Fugenflächen mit einzubringen, so dass hier eine noch größere Sicherheit der Dichtigkeit gewährleistet wird. Bei Federelementen basierend auf einer Parabolmembran sind aufgrund der geringeren Baugröße Drücke von 200 bis 1500 bar vorgesehen. Die Membran kann diesem Druck nur widerstehen, wenn sie sauber und an allen Stellen in den kegelförmigen Hohlraum des Elastomerbauteiles geführt wird und keinen Kontakt mit den harten Zwischenblechen bekommt. Im Betrieb der Membran wird diese sich soweit ausdehnen, dass der Elastomerraum innerhalb der zentrischen Bohrungen der Zwischenbleche (2) weitestgehend, d.h. zu etwa 80 % verdrängt wird, so dass die Membran relativ nahe an die Zwischenbleche kommt. Deshalb ist ein Mindestabstand (28) zu den Zwischenblechen (2) erforderlich. Dieser sollte mindestens 5 mm betragen. Die Vorspannung zwischen Membranplatte (9) und Vorspannplatte (21) kann auch so umgekehrt werden, dass der innere Wulst-Klemmungs- Bereich von (9) getrennt ist und mittels Schrauben beigezogen werden kann (Abb. 14). Auch hier sollte ein Vorspann-Freiraum (22) vorgesehen sein.

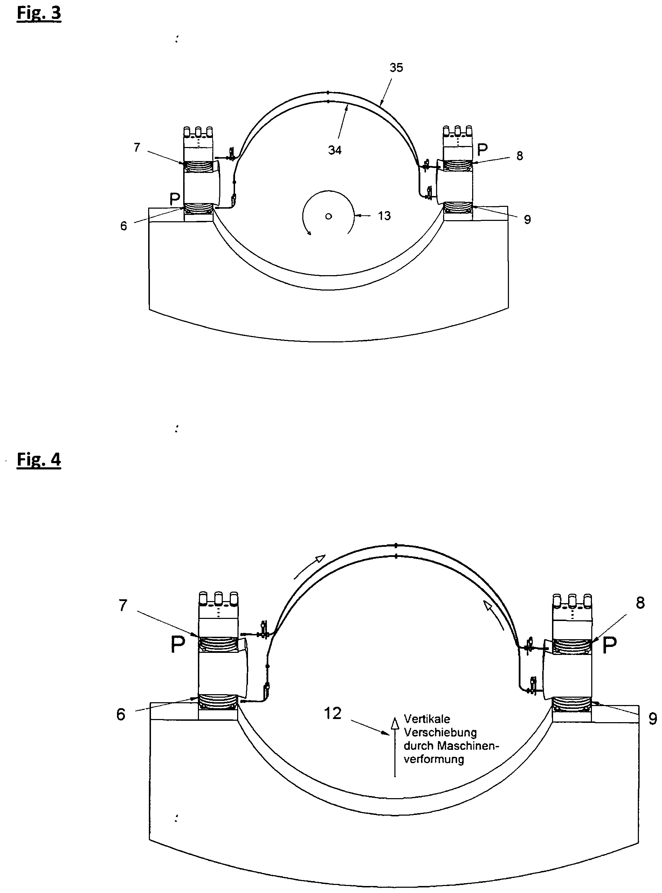

Die in eine Windkraftanlage eingebauten Federelement, bzw. solche Elemente enthaltenden Lagerungen funktionieren in Bezug auf die Dämpfung der Anlage wie folgt: Das Getriebe weist beidseitig eine getriebeseitige Drehmomentstütze (11) auf (Abb. 1, 2). Dieses wird umschlungen mit einem Joch (10). Zwischen der getriebeseitigen Drehmomentstütze (11) und dem Joch (10) sind Elastomerelemente (06, 07, 08 und 09) angeordnet. Die Elastomerelemente enthalten einen Hohlraum, der mit Flüssigkeit gefüllt ist. Diese Hohlräume jeweils, sind wie in Abb. 3, 4 dargestellt, mit Hydraulikleitunegn (34, 35), welche Rohrleitungen oder Schläuche sein können, miteinander verbunden. Bei normal auftretendem Drehmoment der Windkraftanlage werden die Federelemente (06, 08) belastet. Beide sind mit der Hydraulikleitung (34) so miteinander verbunden, dass durch den gleichzeitig entstehenden Druck keine Flüssigkeitsbewegung stattfindet. Ebenso werden die Elastomerelemente (07, 09) gleichzeitig entlastet, so dass sich auch in der Hydraulikleitung (35) keine Hydraulikflüssigkeit bewegt wird. In Drehmomentrichtung zeigen die Federn somit eine steife Federcharakteristik, d.h. sie sind unbeeinflusst von dem Hydrauliksystem.

Wie bereits erwähnt, sind die beschriebenen erfindungsgemäßen Federelemente besonders geeignet für einen Einsatz als Lagerpunkte in Zwei-, Vier- oder Mehrpunktlagerungen, vorzugsweise in Windkraftanlagen. Ein Lagerpunkt umfasst vorzugsweise zwei Elastomerfeder-Systeme, die das zu lagernde Maschinenteil in einem Punkt halten (z.B. oben und unten) (Abb. 1). Ein solches Elastomerfeder-System besteht vorzugsweise aus einer erfindungsgemäßen Elastomerfeder, kann aber auch aus einer ganzen Anordnung von entsprechend angeordneten Federn bestehen. Bei der im Bild 2 dargestellten hydraulisch geregelten Zweipunktlagerung einer Windkraftanlage sind zwei Lagerpunkte mit je zwei Elastomerfedern verwendet. Die beiden Lagerpunkte sind durch hydraulische Leitungen miteinander verbunden (Abb. 3 und 4), und zwar in der Weise, dass die eine Elastomerfeder des einen Lagerpunktes mit der gegenüberliegenden Elastomerfeder des anderen gegenüberliegenden Lagerpunktes verbunden ist (kreuzweise Verbindung). Wird nun in einem Lagerpunkt die Elastomerschicht durch einwirkende Kräfte aus dem Maschinenbereich zusammengepresst, geschieht zwangsläufig, dass hydraulische Flüssigkeit durch die entsprechende Leitung in das mit ihr verbundene Federelement des gegenüberliegenden Lagerpunktes gepresst wird und hier deren Elastomerschicht komprimiert. Hierdurch kann eine optimale Steifigkeitsregulierung und somit Dämpfung erfolgen.

Die elastomerhydraulische Lagerung ist ebenso für getriebelose Anlagen von Wichtigkeit. Bei diesen Anlagen ist der Generator gleichermaßen direkt - ohne elastische Kupplung- auf der Rotorwelle angeordnet. Das System hat damit die gleiche Problematik wie Getriebe Anlagen. Auch hier gehen radiale Verschiebekräfte in den Rotor ein. Der Luftspalt zwischen dem auf der Rotorwelle sitzenden Rotor und dem am Chassis befestigten Stator des Generators muss für einen guten Wirkungsgrad möglichst klein gehalten werden und wird jedoch durch die nach dem Stand der Technik auftretenden radialen Zwangskräfte verändert.

Die neben der unerwünschten Verschiebung auftretenden Zwangskräfte verhalten sich wie beim Getriebe.

In Abb. 4 ist die vertikale Verschiebung durch Maschinenverformung aufgezeigt. Bei Verschiebung des Getriebes nach oben vom Maschinenträger geschieht folgendes: Die Federelemente (07) und (08) erfahren eine Druckerhöhung während in den Elementen (06) und (09) der Druck abfällt. Durch die kreuzweise Verlegung der Verbindungsleitungen der Federelemente (08) zu (06) fließt die Flüssigkeit von dem stärker belasteten oberen Teil zu dem entlasteten Federelement (06), was eine Verringerung der Widerstandskraft des Elastomerelementes (08) bewirkt, während gleichzeitig die in dem Elastomerelement (06) entstehende Flüssigkeitsreduzierung wieder durch die Flüssigkeit aus dem Federelement (08 )nachgefüllt wird. Das gleiche Prinzip findet Anwendung zwischen den Federelementen (07) und (09), so dass diese vertikale Bewegung mit deutlich kleinerer Federsteifigkeit erfolgt.

Abb. 5 zeigt ein Diagramm mit der hohen Steifigkeit in Torsionsrichtung und der geringeren Steifigkeit bei vertikaler Verschiebung des Getriebes zum Maschinenträger. Somit kann mit dem erfindungsgemäßen System eine für die Verbindung zwischen Getriebe und Generator erforderliche hohe Torsionssteifigkeit erreicht werden, während gleichzeitig eine geringe Verschiebesteifigkeit zwischen Getriebe und Maschinenträger erreicht wird, was zur Reduzierung von Zwangskräften und damit zur Entlastung von Getriebe- und Rotorlagern führt. Dabei ist die Torsionssteifigkeit um den Faktor 4 bis 100, vorzugsweise 4 bis 15, insbesondere 6 bis 10 höher als die vertikale Verschiebesteifigkeit.

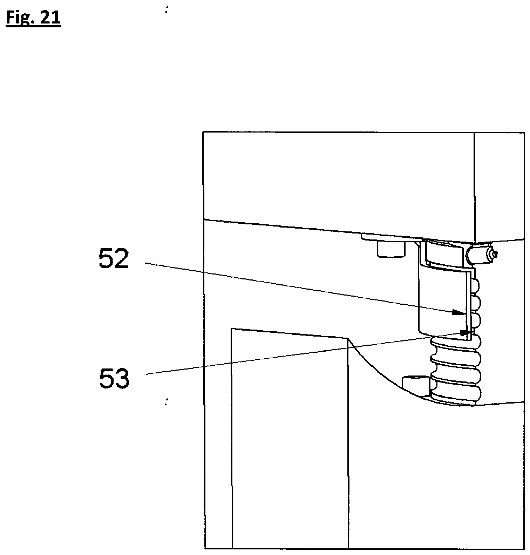

Um die großen Steifigkeitsverhältnisse zu erreichen sind möglichst viele Schichten (Idealerweise 5 bis 10Schichten)erforderlich. Da mit großer Schichtanzahl auch die radiale Steifigkeit sinkt, neigen die Bauteile bei den in seltenen Fällen auftretenden besonders hohen Extremlasten zum radialen Ausknicken. Um das zu verhindern, ist ein Zwischenblech im mittleren bereich der Elemente Pos. 53 (FIG 21) mit einem größeren Durchmesser und größerer Dicke ausgeführt. Um die Schicht am Ausknicken zu verhindern ist ein zusätzlicher fixierter Anschlagring Pos. 52 mit einem Abstand von (3mm bis 6mm) um das Bauteil gelegt, der dieses am Ausknicken hindert. Beide Teile, 52 u. 53 sind aus rostfreiem Material, um korrosiven Metallstaub - Abrieb Anschlagen von Pos. 53 an Pos. 52 im Extremlastfall- zu vermeiden.

Im Extremlastfall treten, wie bereits dargelegt, deutlich höhere Drehmomente auf als im Normalbetrieb. Der Extremlastfall beschreibt eine kritische Situation der Windkraftanlage. Das erfindungsgemäße System sieht vor, dass zwischen der durch Drehmoment beaufschlagten Druckleitung (34) in der in diesem Zustand unter schwachem Druck stehenden Entlastungsseite (35) Überdruckventil (31) gebaut wird. Tritt nun in dem selten vorkommenden Extremlastfall ein hoher Druck in der Druckleitung (34) auf, so wird das Überdruckventil (31) geöffnet. Damit strömt die Flüssigkeit aus der druckbeaufschlagten Leitung (34) in die Leitung (35) mit weniger Druck. Die Fließgeschwindigkeit in dieser Leitung wird durch die Drossel (33) gebremst, so dass hier eine starke Dämpfungsfunktion entsteht. Somit werden die bei der Extremlast auftretenden Lasten der Windkraftanlage mit Hilfe der Ventilfunktion (31) der Drossel (33) reduziert. Die Elastomerbauteile sind so ausgelegt, dass sie auch ohne Flüssigkeit weiter betrieben werden können. Bei dem nächsten Stillstand, der intervallmäßig auftritt oder nach einem Extremlastfall eingeleitet wird, wird das Ventil (32) automatisch geöffnet, so dass in den Verbindungsleitungen (34 und 35) wieder gleicher Druck entsteht, was nach kurzer Zeit der Fall ist. Das System ist anschließend wieder im Ursprungszustand, so dass der Druckschalter (32) wieder geschlossen werden kann.

Die oben beschriebene Ventilfunktion hat neben der Schwingungsreduzierung auch den Vorteil, dass die Hydraulikleitungen nicht für den bei Extremlast vorherrschenden Druck ausgelegt werden müssen. Ferner können die Extremlasten durch die auftretende Dämpfung in der Verbindungsleitung mit der zusätzlichen Drossel (33) reduziert werden. Während das Überdruckventil (31) mit der Drossel (33) nur im Extremlastfall wirksam sind, können weitere Drosseln (36 und 37) in der Druck- und Entlastungsseite angeordnet. Diese bringen eine Dämpfung in das Gesamtsystem, während die Anlage arbeitet. D.h. jede Verschiebung des Maschinenrahmens ist in der Regel mit Schwingungen der gesamten Anlage in Verbindung zu bringen. Diese Schwingungen werden durch die vorhandenen Drosseln (36 und 37) gedämpft, was eine Lastreduzierung in der Windkraftanlage erwirkt. Die Drosseln (36 und 37) können in Form von einstellbaren Drosseln nach dem Stand der Technik eingebaut werden. Es ist jedoch auch möglich, alle Hydraulikleitungen so zu dimensionieren, dass die Drosselfunktion bereits durch die Flüssigkeitsreibung in den Leitungen erwirkt wird.

Alle bisher beschriebenen Funktionen sind passiv, d.h. ohne jegliche Fremdeinwirkung. Es ist jedoch auch möglich, das System aktiv zu betreiben. Dazu wird abwechselnd Flüssigkeit in die verschiedenen Kammern eingepumpt und abgelassen, so dass eine Zwangsbewegung, die unerwünschten Schwingungen und Bewegungen entgegen wirkt, mit diesem System im Kraftfluss der Windkraftanlage erfolgt.

Die Elastomerhydraulische Lagerung ist ebenso bei getriebelose Anlagen von einsetzbar. Bei diesen Anlagen ist der Generator gleichermaßen direkt - ohne elastische Kupplung- auf der Rotorwelle angeordnet. Das System hat damit die gleiche Problematik wie Getriebe Anlagen.

Bei Verbiegung der Rotorwelle und Des Maschinenträgers treten auch hier Zwangsverformungen auf.

Die radialen Verschiebekräfte wirken dabei auf den Rotor und Stator und bewirken damit Zwänge und Verschiebungen. Der Luftspalt zwischen dem auf der Rotorwelle sitzenden Rotor und dem am Chassis befestigten Stator des Generators muss für einen guten Wirkungsgrad möglichst klein gehalten werden.

Durch die die nach dem Stand der Technik auftretenden radialen Zwangskräfte wird dieser verändert und muss um den Kontakt zwischen Rotor und Stator zu verhindern entsprechend groß sein.

Die neben der unerwünschten Verschiebung auftretenden Zwangskräfte verhalten sich wie beim Getriebe. Sie verursachen Zusatzlasten auf die Lagerung.

Zur Lagerung des Generators 54 am Maschinenträger 55 sind - wie bei der Getriebelagerung- mindestens ein Paar, bestehend aus zwei Lagerelementen Pärchen erforderlich, die durch die beschriebenen Hydraulikleitungen kreuzweise miteinander verbunden sind.

Um Die Kräfte möglichst gleichmäßig in den Generator einzuleiten ist es möglich mehrere Paare anzuordnen.

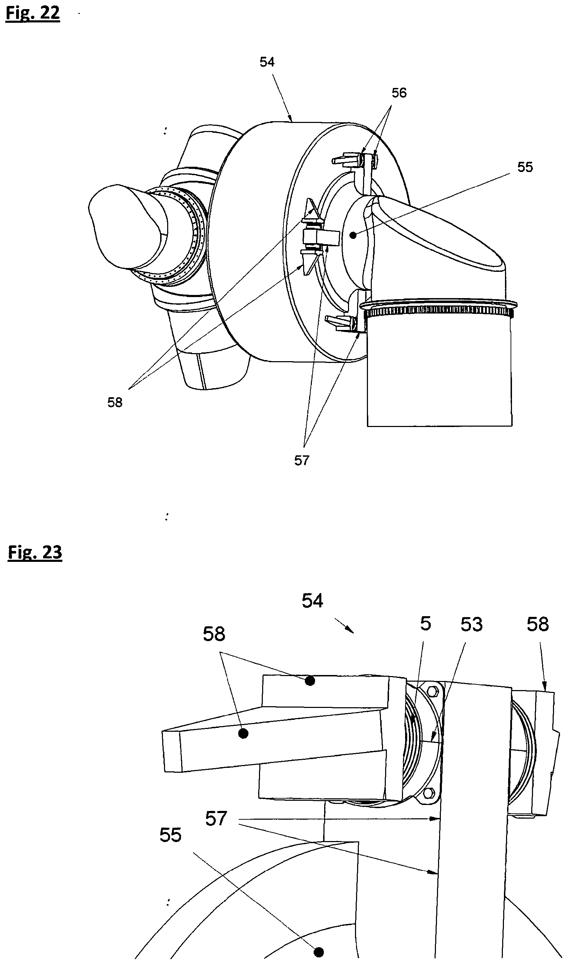

In Fig. 22 sind als Beispiel 2 Paare angeordnet.

Die Element können am Generator - wie in Fig. 22 beschrieben- axial angeordnet werden. In Bild 22 ist die Anordnung der Lagerung hinter dem Generator auf der vom Rotor abgewandten Seite gezeichnet. Eine Anordnung vor dem Generator, in Richtung des Rotors ist ebenfalls möglich.

Es ist auch möglich, die Lagerung am Generator Umfang in radialer Ausdehnung zu platzieren. Die Kombination aus beiden Systemen oder aus den drei genannten Systemen ist ebenfalls möglich und bei sehr großen Generatoren, größer 5MW sicher sinnvoll. Zusammengefasst sind folgende Bauteile, Vorrichtungen oder Verwendungen besagter Bauteile und Vorrichtungen Gegenstand der Offenbarung:
- In seiner Steifigkeit durch hydraulisch erzeugten Druck einstellbares Federelement umfassend
   (i) zwei oder mehrere Elastomerschichten (1),
   (ii) eine oder mehrere unelastische Zwischenschichten (2) sowie
   (iii) mindestens eine Hydraulik-Vorrichtung (4, 7, 9, 11, 12);
wobei die Elastomerschichten durch die unelastische Zwischenschichten voneinander getrennt sind und die unelastische Zwischenschichten eine zentrisch angeordnete Öffnung oder Bohrung aufweisen, so dass das Federelement zumindest im Inneren einen durchgehenden elastomeren Kernbereich aufweist mit dem die einzelnen Elastomerschichten in Verbindung stehen, und die Hydraulik-Vorrichtung am oberen und / oder unteren Ende des schichtartigen Federelementes angebracht ist und durch

Einbringung einer hydraulischen Flüssigkeit in das Federelement mittels hydraulischen Drucks die Kompression des Elastomermaterials (1) in vertikaler Richtung zu den Schichten des Federelementes bewirkt und so zu einer Entstehung oder Vergrößerung eines hydraulische Flüssigkeit enthaltenden Verdrängungsraumes im elastomeren Kernbereich des Federelementes führt, wobei dass zwischen den Elastomerschichten (1) des Federelements und dem Verdrängungsraum eine elastische entsprechend geformte Druckmembran (5), (25) angeordnet ist, die an ihrem Rand mit der Hydraulik-Vorrichtung oder Teilen davon fest verbunden ist, so dass ein hydraulische Flüssigkeit enthaltender Membranraum (12) entsteht, der im Falle eines hydraulischen Druckes dem Verdrängungsraum entspricht, und die Hydraulik-Vorrichtung über eine Hydraulikleitung (4) mit dem Membranraum in Verbindung steht und ein oder mehrere Abdichtungs-Elemente, (10, 10a, 6, 21, 22, 24) umfasst, welche eine Vorspannung aufweisen und so angeordnet sind, dass sie auf die Druckmembran im Bereich ihrer festen Verbindung zur Hydraulik-Vorrichtung einen erhöhten Druck gegenüber dem Druck im Membranraum erzeugen, so dass der Membranraum gegenüber den Schichten des Federelementes einerseits und gegenüber der Hydraulik-Vorrichtung bzw. Teilen davon andrerseits druckdicht abgeschlossen ist.
- Ein entsprechendes Federelement, bei dem die elastische Druckmembran (5) auf einer zur Hydraulik-Vorrichtung gehörenden Membranplatte (9) aufliegt, und an ihrem Rand mit dieser über einen elastischen Wulst (10), der eine T-Nut förmige Aussparung (10a) in der Membranplatte ausfüllt, verbunden ist, und ein unelastisches Druckerhöhungselement (6) zwischen Elastomerschicht (1) und der Druckmembran im Bereich ihres Wulstes angeordnet ist, welches ein entsprechend geformtes Profil besitzt, das bei Vorspannung in das elastische Material im Bereich des Wulstes der Druckmembran gepresst wird, und somit zu einer gezielten Abdichtung im Bereich der T-Nut der Membranplatte führt.
- Ein entsprechendes Federelement, bei dem das unelastische Druckerhöhungselement (6) ein Profilring ist.
- Ein entsprechenes Federelement, bei dem zwischen Duckerhöhungselement (6) und elastischem Wulst (10) der Druckmembran ein Vorspannfreiraum (10c) vorliegt.
- Ein entsprechendes Federelement, bei dem das Druckerhöhungselement ersetzt ist durch die Membranplatte (9) selbst, welche im Bereich der T-Nut verpresst ist, so dass es zu einer Abdichtung in diese Bereich kommt.
- Ein entsprechendes Federelement, bei dem die Membranplatte (9) die Bodenfläche eines Membranraumes (12) mit konvexer Oberfläche darstellt.
- Ein entsprechendes Federelement, bei dem die Membranplatte konkav gekrümmt ist.
- Ein entsprechendes Federelement, bei dem die Elastomerschicht (1) im Bereich der Berührungsfläche mit der Druckmembran (5) konkav gekrümmt ist.
- Ein entsprechendes Federelement, bei dem ein linsenförmiger Membran- bzw.Verdrängungsraum vorliegt.
- Ein entsprechendes Federelement, bei dem die Membranplatte (9) Hydraulikzuleitungen (4) und -Anschlüsse (7) aufweist, welche durch die Membranplatte führen und im Membranraum münden.
- Ein entsprechendes Federelement, bei dem das Federelement eine Trägerplatte (11) für die Elastomerschichten (1) aufweist.
- Ein entsprechendes Federelement, bei dem die Membranplatte (9) ein separater Teil der Trägerplatte (11) ist.
- Ein entsprechendes Federelement, bei dem die Membranplatte gegenüber der Trägerplatte verspannt ist.
- Ein entsprechendes Federelement, bei dem die elastische Druckmembran (25) einen umlaufenden endständigen elastischen T-förmigen Wulst (10), bestehend aus einem äußeren (26) und inneren Wulst (23), aufweist und mit einer zur Hydraulik-Vorrichtung gehörenden Membranplatte (9) auf die Weise druckdicht verbunden ist, dass besagte Wulste in ein entsprechend geformtes passendes T-förmiges Hohlprofil eingelegt sind, welches von einem entsprechend geformten Membrankopf (9a) und einer Vorspannscheibe (21) gebildet wird, wobei (a) der Membrankopf innerhalb der Membran und des Membranraumes (12) angeordnet ist und eine umlaufenden überstehende Lippe besitzt, welche den inneren Wulst (23) der Membran aufnimmt, und (b) die Vorspannplatte eine ringartige Öffnung aufweist, welche den Membrankopf (9a) mit der Druckmembran passgenau aufnimmt, und der Rand der Öffnung von einer überstehenden Lippe gebildet wird, welche den äußeren elastischen Wulst (26) der Membran aufnimmt.
- Ein entsprechend dem vorigen Absatz beschriebenes Federelement, bei dem die Vorspannscheibe (21) ganz oder teilweise auf der Membranplatte (9) aufliegt und zwischen dieser und der Elastomerschicht (1) angeordnet ist.
- Ein entsprechendes Federelement, bei dem die Vorspannscheibe (21) Trägerplatte für das Federelement ist und im Bereich der Druckmembran eine passgenaue Aussparung besitzt, in welche die entsprechend geformte Membranplatte (9) eingesetzt wird.
- Ein entsprechendes Federelement, bei dem die Vorspannsscheibe (21) mit den Elastomerschichten (1) außerhalb des Bereiches der Druckmembran fest verbunden ist.
- Ein entsprechendes Federelement, bei dem die Membranscheibe (9) gegen die Vorspannscheibe (21) mittels Befestigungsmitteln verspannt ist, so dass der T-förmige elastische Wulst (23, 26) der Druckmembran komprimiert wird.
- Ein entsprechendes Federelement, bei dem die Membranplatte (9) Hydraulikzulauf und - Anschluss (4, 7) aufweist, wobei der Hydraulikzulauf durch den Membrankopf (9a) führt und im Membranraum (12) mündet.
- Ein entsprechendes Federelement, bei dem ein Vorspannfreiraum (22) vorgesehen ist, der im ungespannten Zustand gebildet wird im Bereich, in dem äußerer Wulst (26), Membranscheibe (9) und Vorspannscheibe (21) zusammentreffen, und der sich bei Verspannen der Teile (21) und (9) durch Hineindrücken von Wulstmaterial vollständig schließt.
- Ein entsprechendes Federelement, bei dem die Druckmembran (25) steif ist und eine paraboloide oder kegelförmige Oberfläche aufweist, welche mit dem an der Basis befindlichen Membrankopf (9a) einen entsprechend geformten kegelhutartigen Membranhohlraum (12) bzw. einen Membrankegelhut (12a) bildet.
- Ein entsprechendes Federelement, bei dem die Elastomerschichten (1) im Kern des Federelementes eine dem Membranhohlraum (12) entsprechend geformte kegelförmige Kavität besitzen, welche von dem von der Druckmembran gebildeten Membrankegelhut (12a) ausgefüllt wird.
- Ein entsprechendes Federelement, bei dem der Membranhohlraum (12) des Druckmembrankegelhuts (12a) eine Anschlagvorrichtung (50) aufweist, welche bei Überlastung des Systems verhindert, dass die kegelförmige Druckmembran irreversibel kollabiert.
- Ein entsprechendes Federelement, bei dem die Anschlagvorrichtung (50) aus einem unelastischen Material in Form eines Kegelhutes gefertigt ist, welcher zentral im Inneren des Membranhohlraums (12) auf der Grundfläche des Membrankopfes (12a) angeordnet ist und eine Zulaufführung und Anschluss zur Hydraulikzuleitung (4) aufweist.
- Ein entsprechendes Federelement, welche auf einer Seite eine entsprechende Hydraulik-Vorrichtung aufweist.
- Ein entsprechendes Federelement, welches auf der der Hydraulik-Vorrichtung gegenüberliegenden Seite im Kernbereich des Federelementes eine Aussparung oder einen Hohlraum (40) im Elastomermaterial aufweist, welche(r) so geformt und ausgestaltet ist, dass sie/er mittels eines Steges (42) aus Elastomermaterial der Schichten (1) von dem Membranraum (12) getrennt ist, so dass der Steg bei Erhöhung des hydraulischen Druckes im Membranraum in den Hohlraum bzw. die Aussparung gedrückt werden kann.
- Ein entsprechendes Federelement, bei dem die Aussparung bzw. der Hohlraum (40) ein unelastisches Kalibrierungselement (3, 8) aufweist, mit dessen Hilfe sich das Volumen der Aussparung bzw. des Hohlraums (4) verändern lässt.
- Maschinen- oder Getriebelager, umfassend mindestens zwei gleichartig ausgerichtete Federelementewie oben und unten näher beschrieben.
- Ein entsprechendes Lager, bei dem die Federelemente durch kreuzweise angeordnete Hydraulikleitungen (34, 35) miteinander verbunden sind.
- Ein entsprechendes Lager, bei dem die Hydraulikleitungen mit mindestens einem Überdruckventil (31) und einem Drosselventil (33, 36, 37) ausgestattet sind.
- Verwendung eines entsprechenden Lagers zur Abfederung von Verbiegungs-, Verformungs- und Verschiebungskräften in Windkraftanlagen.
- Eine entsprechende Verwendung zur Abfederung von Verbiegungs-, Verformungs- und Verschiebungskräften im Extremlastfall, die vertikal zu den montierten Federelementen auftreten.
- Eine entsprechende Verwendung für getriebelose Anlagen.

## Patentansprüche

1. In seiner Steifigkeit durch hydraulisch erzeugten Druck einstellbares Federelement, geeignet für Drücke von 100 bar bis 1500 bar, umfassend
(i) zwei oder mehrere Elastomerschichten (1) und eine oder mehrere unelastische Zwischenschichten (2), wobei die Elastomerschichten durch die unelastische Zwischenschichten voneinander getrennt sind und die unelastische Zwischenschichten eine zentrisch angeordnete Öffnung oder Bohrung aufweisen, so dass das Federelement zumindest im Inneren einen durchgehenden elastomeren Kernbereich aufweist mit dem die einzelnen Elastomerschichten in Verbindung stehen, und
(ii) mindestens eine Hydraulik-Vorrichtung (4, 7, 9, 11, 12), welche am oberen und / oder unteren Ende des schichtartigen Federelementes angebracht ist und durch Einbringung einer hydraulischen Flüssigkeit in das Federelement mittels hydraulischen Drucks die Kompression des Elastomermaterials (1) in vertikaler Richtung zu den Schichten des Federelementes bewirkt und so zu einer Entstehung oder Vergrößerung eines hydraulische Flüssigkeit enthaltenden Verdrängungsraumes im elastomeren Kernbereich des Federelementes führt, wobei
(a) zwischen den Elastomerschichten (1) des Federelements und dem Verdrängungsraum eine elastische entsprechend geformte Druckmembran (5), (25) angeordnet ist, die an ihrem Rand mit der Hydraulik-Vorrichtung oder Teilen davon fest verbunden ist, so dass ein hydraulische Flüssigkeit enthaltender Membranraum (12) entsteht, der im Falle eines hydraulischen Druckes dem Verdrängungsraum entspricht, und (b) die Hydraulik-Vorrichtung über eine Hydraulikleitung (4) mit dem Membranraum in Verbindung steht,
**dadurch gekennzeichnet, dass** die Hydraulik-Vorrichtung ein oder mehrere Abdichtungs-Elemente, (10, 10a, 6, 21, 22, 24) umfasst, welche eine Vorspannung aufweisen und so angeordnet sind, dass sie auf die Druckmembran im Bereich ihrer festen Verbindung zur Hydraulik-Vorrichtung einen erhöhten Druck gegenüber dem Druck im Membranraum erzeugen, so dass der Membranraum gegenüber den Schichten des Federelementes einerseits und gegenüber der Hydraulik-Vorrichtung bzw. Teilen davon andrerseits druckdicht abgeschlossen ist.

2. Federelement gemäß Anspruch 1, **dadurch gekennzeichnet, dass** die elastische Druckmembran (5) auf einer zur Hydraulik-Vorrichtung gehörenden Membranplatte (9) aufliegt, und an ihrem Rand mit dieser über einen elastischen Wulst (10), der eine T-Nut förmige Aussparung (10a) in der Membranplatte ausfüllt, verbunden ist, und ein unelastisches Druckerhöhungselement (6) zwischen Elastomerschicht (1) und der Druckmembran im Bereich ihres Wulstes angeordnet ist, welches ein entsprechend geformtes Profil besitzt, das bei Vorspannung in das elastische Material im Bereich des Wulstes der Druckmembran gepresst wird, und somit zu einer gezielten Abdichtung im Bereich der T-Nut der Membranplatte führt.

3. Federelement nach einem der Ansprüche 1 oder 2, **dadurch gekennzeichnet, dass** zwischen Duckerhöhungselement (6) und elastischem Wulst (10) der Druckmembran ein Vorspannfreiraum (10c) vorliegt.

4. Federelement gemäß Anspruch 2, **dadurch gekennzeichnet, dass** das Druckerhöhungselement ersetzt ist durch die Membranplatte (9) selbst, welche im Bereich der T-Nut verpresst ist, so dass es zu einer Abdichtung in diese Bereich kommt.

5. Federelement nach einem der Ansprüche 1 bis 4, **dadurch gekennzeichnet, dass** die Elastomerschicht (1) im Bereich der Berührungsfläche mit der Druckmembran (5) konkav gekrümmt ist, so dass ein linsenförmiger Membran- bzw.Verdrängungsraum vorliegt.

6. Federelement nach einem der Ansprüche 1 bis 5, **dadurch gekennzeichnet, dass** die Membranplatte (9) Hydraulikzuleitungen (4) und -Anschlüsse (7) aufweist, welche durch die Membranplatte führen und im Membranraum münden.

7. Federelement nach einem der Ansprüche 1 bis 6, **dadurch gekennzeichnet, dass** das Federelement eine Trägerplatte (11) für die Elastomerschichten (1) aufweist.

8. Federelement nach Anspruch 7, **dadurch gekennzeichnet, dass** die Membranplatte (9) ein separater Teil der Trägerplatte (11) ist und gegenüber dieser verspannt ist.

9. Federelement gemäß Anspruch 1, **dadurch gekennzeichnet, dass** die elastische Druckmembran (25) einen umlaufenden endständigen elastischen T-förmigen Wulst (10), bestehend aus einem äußeren (26) und inneren Wulst (23), aufweist und mit einer zur Hydraulik-Vorrichtung gehörenden Membranplatte (9) auf die Weise druckdicht verbunden ist, dass besagte Wulste in ein entsprechend geformtes passendes T-förmiges Hohlprofil eingelegt sind, welches von einem entsprechend geformten Membrankopf (9a) und einer Vorspannscheibe (21) gebildet wird, wobei (a) der Membrankopf innerhalb der Membran und des Membranraumes (12) angeordnet ist und eine umlaufenden überstehende Lippe besitzt, welche den inneren Wulst (23) der Membran aufnimmt, und (b) die Vorspannplatte eine ringartige Öffnung aufweist, welche den Membrankopf (9a) mit der Druckmembran passgenau aufnimmt, und der Rand der Öffnung von einer überstehenden Lippe gebildet wird, welche den äußeren elastischen Wulst (26) der Membran aufnimmt.

10. Federelement nach Anspruch 9, **dadurch gekennzeichnet, dass** die Vorspannscheibe (21) ganz oder teilweise auf der Membranplatte (9) aufliegt und zwischen dieser und der Elastomerschicht (1) angeordnet ist.

11. Federelement nach Anspruch 9, **dadurch gekennzeichnet, dass** die Vorspannscheibe (21) Trägerplatte für das Federelement ist und im Bereich der Druckmembran eine passgenaue Aussparung besitzt, in welche die entsprechend geformte Membranplatte (9) eingesetzt wird.

12. Federelement nach einem der Ansprüche 9 bis 11, **dadurch gekennzeichnet, dass** die Membranplatte (9) Hydraulikzulauf und -Anschluss (4, 7) aufweist, wobei der Hydraulikzulauf durch den Membrankopf (9a) führt und im Membranraum (12) mündet.

13. Federelement nach einem der Ansprüche 9 bis 12, **dadurch gekennzeichnet, dass** ein Vorspannfreiraum (22) vorgesehen ist, der im ungespannten Zustand gebildet wird im Bereich, in dem äußerer Wulst (26), Membranscheibe (9) und Vorspannscheibe (21) zusammentreffen, und der sich bei Verspannen der Teile (21) und (9) durch Hineindrücken von Wulstmaterial vollständig schließt.

14. Federelement nach einem der Ansprüche 9 bis 13, **dadurch gekennzeichnet, dass** die Druckmembran (25) steif ist und eine paraboloide oder kegelförmige Oberfläche aufweist, welche mit dem an der Basis befindlichen Membrankopf (9a) einen entsprechend geformten kegelhutartigen Membranhohlraum (12) bzw. einen Membrankegelhut (12a) bildet.

15. Federelement nach Anspruch 14, **dadurch gekennzeichnet, dass** die Elastomerschichten (1) im Kern des Federelementes eine dem Membranhohlraum (12) entsprechend geformte kegelförmige Kavität besitzen, welche von dem von der Druckmembran gebildeten Membrankegelhut (12a) ausgefüllt wird.

16. Federelement nach einem der Ansprüche 1 bis 15, **dadurch gekennzeichnet, dass** es auf einer Seite eine entsprechende Hydraulik-Vorrichtung und auf der gegenüberliegenden Seite eine hohlraumförmige Aussparung (40) im Elastomermaterial aufweist, welche so geformt und ausgestaltet ist, dass sie mittels eines Steges (42) aus von den Schichten (1) gebildeten Elastomermaterial von dem Membranraum (12) getrennt ist, so dass der Steg bei Erhöhung des hydraulischen Druckes im Membranraum in die hohlraumförmige. die Aussparung gedrückt werden kann.

17. Maschinen- oder Getriebelager, umfassend mindestens zwei gleichartig ausgerichtete Federelemente gemäß der Ansprüche 1 bis 16.

18. Verwendung eines Lagers nach Anspruch 17 zur Abfederung von Verbiegungs-, Verformungs- und Verschiebungskräften in Windkraftanlagen für mit einem Getriebe ausgestattete und für getriebelose Anlagen.

## Claims

1. Spring element which is adjustable in its stiffness by hydraulically generated pressure, suitable for pressures from 100 bar to 1500 bar, comprising
(i) two or more elastomer layers (1) and one or more non-elastic interlayers (2), where the elastomer layers are separated from one another by the non-elastic interlayers and the non-elastic interlayers have a centrally arranged opening or hole, so that the spring element has, at least in the interior, a continuous elastomeric core region to which the individual elastomer layers are connected, and
(ii) at least one hydraulic device (4, 7, 9, 11, 12), which is mounted at the upper and/or lower end of the layer-like spring element and causes compression of the elastomer material (1) in the vertical direction to the layers of the spring element by introduction of a hydraulic fluid into the spring element by means of hydraulic pressure and thus leads to the formation or enlargement of a displacement space containing hydraulic fluid in the elastomeric core region of the spring element, where
(a) an elastic, correspondingly shaped pressure membrane (5), (25) is arranged between the elastomer layers (1) of the spring element and the displacement space and is securely connected at its edge to the hydraulic device or parts thereof, so that a membrane space (12) containing hydraulic fluid forms, which corresponds to the displacement space in the case of a hydraulic pressure, and (b) the hydraulic device is connected to the membrane space via a hydraulic line (4),
**characterised in that** the hydraulic device comprises one or more sealing elements (10, 10a, 6, 21, 22, 24) which have a pre-tension and are arranged in such a way that they generate an increased pressure, compared with the pressure in the membrane space, on the pressure membrane in the region of their secure connection to the hydraulic device, so that the membrane space is closed off in a pressure-tight manner from the layers of the spring element on the one hand and from the hydraulic device or parts thereof on the other hand.

2. Spring element according to Claim 1, **characterised in that** the elastic pressure membrane (5) lies on a membrane plate (9) belonging to the hydraulic device, and is connected at its edge to this plate via an elastic bead (10), which fills a T groove-shaped recess (10a) in the membrane plate, and a non-elastic pressure-increasing element (6), which has a correspondingly shaped profile which, in the case of pre-tension, is forced into the elastic material in the region of the bead of the pressure membrane and thus leads to specific sealing-off in the region of the T groove of the membrane plate, is arranged between elastomer layer (1) and the pressure membrane in the region of its bead.

3. Spring element according to one of Claims 1 or 2, **characterised in that** a pre-tension space (10c) is present between pressure-increasing element (6) and elastic bead (10) of the pressure membrane.

4. Spring element according to Claim 2, **characterised in that** the pressure-increasing element has been replaced by the membrane plate (9) itself, which is compressed in the region of the T groove, so that sealing-off occurs in this region.

5. Spring element according to one of Claims 1 to 4, **characterised in that** the elastomer layer (1) is curved in a concave manner in the region of the contact area with the pressure membrane (5), so that a lenticular membrane or displacement space is present.

6. Spring element according to one of Claims 1 to 5, **characterised in that** the membrane plate (9) has hydraulic supply lines (4) and connections (7) which run through the membrane plate and open out into the membrane space.

7. Spring element according to one of Claims 1 to 6, **characterised in that** the spring element has a support plate (11) for the elastomer layers (1).

8. Spring element according to Claim 7, **characterised in that** the membrane plate (9) is a separate part of the support plate (11) and is tensioned against the latter.

9. Spring element according to Claim 1, **characterised in that** the elastic pressure membrane (25) has a circumferential terminal elastic T-shaped bead (10), consisting of an outer bead (26) and an inner bead (23), and is connected in a pressure-tight manner to a membrane plate (9) belonging to the hydraulic device in such a way that said beads have been introduced into a correspondingly shaped matching T-shaped hollow profile, which is formed by a correspondingly shaped membrane head (9a) and a pre-tensioning disc (21), where (a) the membrane head is arranged inside the membrane and the membrane space (12) and has a circumferential projecting lip, which accommodates the inner bead (23) of the membrane, and (b) the pre-tensioning plate has a ring-shaped opening which accommodates the membrane head (9a) with the pressure membrane with an accurate fit, and the edge of the opening is formed by a projecting lip which accommodates the outer elastic bead (26) of the membrane.

10. Spring element according to Claim 9, **characterised in that** the pre-tensioning disc (21) lies fully or partly on the membrane plate (9) and is arranged between the latter and the elastomer layer (1).

11. Spring element according to Claim 9, **characterised in that** the pre-tensioning disc (21) is the support plate for the spring element and has in the region of the pressure membrane an accurately fitting recess, into which the correspondingly shaped membrane plate (9) is inserted.

12. Spring element according to one of Claims 9 to 11, **characterised in that** the membrane plate (9) has a hydraulic supply line and connection (4, 7), where the hydraulic supply line runs through the membrane head (9a) and opens out into the membrane space (12).

13. Spring element according to one of Claims 9 to 12, **characterised in that** a pre-tensioning space (22) is provided, which, in the untensioned state, is formed in the region in which outer bead (26), membrane disc (9) and pre-tensioning disc (21) coincide, and which closes completely when parts (21) and (9) are tensioned by forcing in bead material.

14. Spring element according to one of Claims 9 to 13, **characterised in that** the pressure membrane (25) is rigid and has a paraboloid or conical surface, which, with the membrane head (9a) located on the base, forms a correspondingly shaped conical hat-like membrane cavity (12) or a membrane conical hat (12a).

15. Spring element according to Claim 14, **characterised in that** the elastomer layers (1) in the core of the spring element have a conical cavity, shaped corresponding to the membrane cavity (12), which is filled by the membrane conical hat (12a) formed by the pressure membrane.

16. Spring element according to one of Claims 1 to 15, **characterised in that** it has on one side a corresponding hydraulic device and on the opposite side a cavity-shaped recess (40) in the elastomer material, which is shaped and designed in such a way that it is separated from the membrane space (12) by means of a bridge (42) of elastomer material formed by the layers (1), so that the bridge can be forced into the cavity-shaped recess when the hydraulic pressure in the membrane space is increased.

17. Machine or gearbox bearing, comprising at least two spring elements according to Claims 1 to 16 aligned in the same direction.

18. Use of a bearing according to Claim 17 for absorbing flexural, deformation and displacement forces in wind turbines for installations fitted with a gearbox and for gearless installations.

## Revendications

1. Elément de ressort qui peut être réglé en termes de raideur au moyen d'une pression générée hydrauliquement, convenant pour des pressions de 100 bars à 1500 bars, comprenant :
(i) deux couches en élastomère ou plus (1) et une ou plusieurs inter-couche(s) non élastique(s) (2), dans lequel les couches en élastomère sont séparées l'une de l'autre ou les unes des autres par les inter-couches non élastiques, et les inter-couches non élastiques comportent une ouverture ou un trou agencé(e) centralement, de telle sorte que l'élément de ressort comporte, au moins dans son intérieur, une région d'âme élastomérique continue à laquelle les couches en élastomère individuelles sont connectées, et
(ii) au moins un dispositif hydraulique (4, 7, 9, 11, 12), lequel est monté au niveau de l'extrémité supérieure et/ou inférieure de l'élément de ressort similaire à une couche et génère une compression du matériau d'élastomère (1) dans la direction verticale par rapport aux couches de l'élément de ressort au moyen de l'introduction d'un fluide hydraulique à l'intérieur de l'élément de ressort au moyen d'une pression hydraulique et conduit ainsi à la formation ou à l'agrandissement d'un espace de déplacement qui contient du fluide hydraulique dans la région d'âme élastomérique de l'élément de ressort, dans lequel
(a) une membrane de pression de forme en correspondance élastique (5), (25) est agencée entre les couches en élastomère (1) de l'élément de ressort et l'espace de déplacement et elle est connectée fermement au niveau de son bord au dispositif hydraulique ou à des parties de celui-ci, de telle sorte qu'un espace de membrane (12) qui contient du fluide hydraulique se forme, lequel espace de membrane correspond à l'espace de déplacement dans le cas d'une pression hydraulique, et (b) le dispositif hydraulique est connecté à l'espace de membrane via une ligne hydraulique (4),
**caractérisé en ce que** le dispositif hydraulique comprend un ou plusieurs élément(s) d'étanchéité (10, 10a, 6, 21, 22, 24) qui présente(nt) une pré-tension et qui est/sont agencé(s) de telle sorte qu'il(s) génère(nt) une pression augmentée, par comparaison avec la pression dans l'espace de membrane, sur la membrane de pression dans la région de sa/leur connexion ferme/sûre sur le dispositif hydraulique, de telle sorte que l'espace de membrane soit fermé d'une manière étanche à la pression par rapport aux couches de l'élément de ressort d'une part et part rapport au dispositif hydraulique ou à des parties de ce dispositif hydraulique d'autre part.

2. Elément de ressort selon la revendication 1, **caractérisé en ce que** la membrane de pression élastique (5) s'étend sur une plaque de membrane (9) qui appartient au dispositif hydraulique, et elle est connectée au niveau de son bord à cette plaque via un talon/bourrelet élastique (10), lequel remplit un évidement en forme de gorge en T (10a) qui est ménagé dans la plaque de membrane, et un élément d'augmentation de pression non élastique (6), lequel présente un profil d'une forme en correspondance qui, dans le cas de la pré-tension, est forcé à l'intérieur du matériau élastique dans la région du talon/bourrelet de la membrane de pression et par conséquent, assure une étanchéité spécifique dans la région de la gorge en T de la plaque de membrane, est agencé entre la couche en élastomère (1) et la membrane de pression dans la région de son talon/ bourrelet.

3. Elément de ressort selon l'une des revendications 1 ou 2, **caractérisé en ce qu'**un espace de pré-tension (10c) est présent entre l'élément d'augmentation de pression (6) et le talon/bourrelet élastique (10) de la membrane de pression.

4. Elément de ressort selon la revendication 2, **caractérisé en ce que** l'élément d'augmentation de pression a été remplacé par la plaque de membrane (9) elle-même, laquelle est comprimée dans la région de la gorge en T, de telle sorte qu'une étanchéité est assurée dans cette région.

5. Elément de ressort selon l'une des revendications 1 à 4, **caractérisé en ce que** la couche en élastomère (1) est incurvée d'une manière concave dans la région de la zone de contact avec la membrane de pression (5), de telle sorte qu'une membrane lenticulaire ou un espace de déplacement est présent(e).

6. Elément de ressort selon l'une des revendications 1 à 5, **caractérisé en ce que** la plaque de membrane (9) comporte des lignes (4) d'alimentation hydraulique et des connexions afférentes (7) qui courent au travers de la plaque de membrane et qui débouchent à l'intérieur de l'espace de membrane.

7. Elément de ressort selon l'une des revendications 1 à 6, **caractérisé en ce que** l'élément de ressort comporte une plaque de support (11) pour les couches en élastomère (1).

8. Elément de ressort selon la revendication 7, **caractérisé en ce que** la plaque de membrane (9) est une partie séparée de la plaque de support (11) et elle est mise sous tension contre cette dernière.

9. Elément de ressort selon la revendication 1, **caractérisé en ce que** la membrane de pression élastique (25) comporte un talon/bourrelet en forme de T élastique terminal circonférentiel (10), lequel est constitué par un talon/bourrelet externe (26) et par un talon/bourrelet interne (23), et elle est connectée d'une manière étanche à la pression à une plaque de membrane (9) qui appartient au dispositif hydraulique de telle sorte que lesdits talons/bourrelets soient introduits à l'intérieur d'un profil creux en forme de T adapté en forme en correspondance, lequel est formé par une tête de membrane de forme en correspondance (9a) et un disque de pré-tension (21), dans lequel (a) la tête de membrane est agencée à l'intérieur de la membrane et de l'espace de membrane (12) et elle comporte une lèvre en saillie circonférentielle, laquelle loge le talon/bourrelet interne (23) de la membrane, et (b) la plaque de pré-tension comporte une ouverture en forme d'anneau/de bague qui loge la tête de membrane (9a) avec la membrane de pression selon un ajustement précis, et le bord de l'ouverture est formé par une lèvre en saillie qui loge le talon/bourrelet élastique externe (26) de la membrane.

10. Elément de ressort selon la revendication 9, **caractérisé en ce que** le disque de pré-tension (21) s'étend en totalité ou partiellement sur la plaque de membrane (9) et est agencé entre cette dernière et la couche en élastomère (1).

11. Elément de ressort selon la revendication 9, **caractérisé en ce que** le disque de pré-tension (21) est la plaque de support pour l'élément de ressort et il comporte, dans la région de la membrane de pression, un évidement d'ajustement de précision à l'intérieur duquel la plaque de membrane de forme en correspondance (9) est insérée.

12. Elément de ressort selon l'une des revendications 9 à 11, **caractérisé en ce que** la plaque de membrane (9) comporte une ligne d'alimentation hydraulique et une connexion afférente (4, 7), dans lequel la ligne d'alimentation hydraulique court au travers de la tête de membrane (9a) et débouche à l'intérieur de l'espace de membrane (12).

13. Elément de ressort selon l'une des revendications 9 à 12, **caractérisé en ce qu'**un espace de pré-tension (22) est ménagé, lequel, dans l'état non sous tension, est formé dans la région dans laquelle le talon/bourrelet externe (26), le disque à membrane (9) et le disque de pré-tension (21) coïncident, et lequel est complétement fermé lorsque les parties (21) et (9) sont mises sous tension en exerçant une force dans le matériau de talon/bourrelet.

14. Elément de ressort selon l'une des revendications 9 à 13, **caractérisé en ce que** la membrane de pression (25) est rigide et elle comporte une surface paraboloïde ou conique, laquelle, avec la tête de membrane (9a) qui est située sur la base, forme une cavité de membrane similaire à un chapeau conique de forme en correspondance (12) ou un chapeau conique de membrane (12a).

15. Elément de ressort selon la revendication 14, **caractérisé en ce que** les couches en élastomère (1) dans l'âme de l'élément de ressort comportent une cavité conique, d'une forme qui correspond à celle de la cavité de membrane (12), laquelle cavité est remplie par le chapeau conique de membrane (12a) qui est formé par la membrane de pression.

16. Elément de ressort selon l'une des revendications 1 à 15, **caractérisé en ce qu'**il comporte, sur un côté, un dispositif hydraulique correspondant et sur le côté opposé, un évidement en forme de cavité (40) dans le matériau d'élastomère, lequel évidement est conformé et configuré de telle sorte qu'il soit séparé de l'espace de membrane (12) au moyen d'un pont (42) en matériau d'élastomère qui est formé par les couches (1), de telle sorte que le pont puisse être forcé à l'intérieur de l'évidement en forme de cavité lorsque la pression hydraulique dans l'espace de membrane est augmentée.

17. Palier de machine ou de boîte de vitesses/transmission, comprenant au moins deux éléments de ressort selon les revendications 1 à 16 qui sont alignés dans la même direction.

18. Utilisation d'un palier selon la revendication 17 pour absorber des forces de flexion, de déformation et de déplacement dans des éoliennes pour des installations sur lesquelles une boîte de vitesses/transmission est montée et pour des installations sans engrenages/à entraînement direct.
